(19) **Europäisches Patentamt / European Patent Office / Office européen des brevets**

(11) **EP 4 768 119 A1**

(12) # EUROPEAN PATENT APPLICATION
published in accordance with Art. 153(4) EPC

(43) Date of publication:
**01.07.2026 Bulletin 2026/27**

(21) Application number: **25798250.4**

(22) Date of filing: **02.05.2025**

(51) International Patent Classification (IPC):
**B01F 35/214** (2022.01)   **B01F 27/721** (2022.01)
**B01F 35/50** (2022.01)   **B01F 35/21** (2022.01)
**B01F 23/53** (2022.01)   **H01M 4/04** (2006.01)
**H01M 4/139** (2010.01)   **H01M 10/00** (2006.01)

(52) Cooperative Patent Classification (CPC):
**B01F 23/53; B01F 27/721; B01F 35/21;**
**B01F 35/214; B01F 35/50; H01M 4/04;**
**H01M 4/139; H01M 10/00;** Y02E 60/10

(86) International application number:
**PCT/KR2025/006015**

(87) International publication number:
**WO 2025/230360 (06.11.2025 Gazette 2025/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.05.2024   KR 20240059394**
**03.05.2024   KR 20240059437**
**03.05.2024   KR 20240059441**

(71) Applicant: **LG Energy Solution, Ltd.**
**Seoul 07335 (KR)**

(72) Inventors:
• **PARK, Ji Hoon**
  **Daejeon 34122 (KR)**
• **KIM, Mi Seon**
  **Daejeon 34122 (KR)**
• **KANG, Seong Wook**
  **Daejeon 34122 (KR)**
• **HAN, Jae Sung**
  **Daejeon 34122 (KR)**
• **KWON, Soon Hyung**
  **Daejeon 34122 (KR)**
• **SONG, Jung Woo**
  **Daejeon 34122 (KR)**
• **CHOI, Ki Suk**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **MIXING SYSTEM, ELECTRODE MANUFACTURING METHOD, AND ELECTRODE MANUFACTURED THEREBY**

(57)   A mixing system according to the present invention includes a pre-mixing system and a kneading system. The kneading system includes a kneading device configured to knead a mixture comprising an active material and a binder, a first sensor device configured to detect brightness of the mixture, and a first controller configured to determine crystallinity of the binder based on brightness information of the mixture, which is detected by the first sensor device.

**(Cont. next page)**

EP 4 768 119 A1

START

MEASURE BRIGHTNESS INFORMATION OF MIXTURE THROUGH SENSOR DEVICE ⌐S100

DETERMINE CRYSTALLINITY OF SLURRY BY BRIGHTNESS INFORMATION OF MIXTURE ⌐S200

S300

IS FIBERIZATION WITHIN PRESET RANGE?

NO

YES

STOP OPERATION OF KNEADING DEVICE OR OPEN OUTLET OF KNEADING DEVICE ⌐S400

END

FIG.13

**Description**

## TECHNICAL FIELD

### CROSS-REFERENCE TO RELATED APPLICATION

The present application claims the benefit of the priority of Korean Patent Application Nos. 10-2024-0059394, filed on May 3, 2024, 10-2024-0059437, filed on May 3, 2024, and 10-2024-0059441, filed on May 3, 2024, which are hereby incorporated by reference in their entirety.

### TECHNICAL FIELD

The present invention relates to a mixing system including a pre-mixing system and a kneading system, a method for manufacturing an electrode performed using the same, and an electrode formed using the same. More particularly, the invention relates to a mixing system including a kneading system configured to measure a degree of kneading in the kneading of a dry electrode and a pre-mixing system configured to mix a mixture including an active material and a binder to manufacture the dry electrode, a method for manufacturing an electrode performed using the same, and an electrode formed using the same.

## BACKGROUND ART

Secondary batteries are being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

Typical secondary batteries are manufactured by applying electrode active material slurry to positive and negative current collectors to form positive and negative electrodes and then performing drying and rolling processes. Then, the positive and negative electrodes are stacked on both sides of a separator to form an electrode assembly having a predetermined shape, and the electrode assembly is accommodated in a battery case, and then, an electrolyte is injected into the battery case to be sealed.

During the process of drying the electrode active material slurry, a solvent contained in the slurry may be evaporated to cause defects such as pinholes or cracks in an electrode active material layer formed on the current collector. In addition, since the inside and outside of the electrode active material slurry are not uniformly dried during the drying process, there is a concern that a quality of the electrode is deteriorated due to powder a floating phenomenon caused by a difference in solvent evaporation rate, that is, because powder of a portion that is dried first ascends to form a gap with a portion that is dried relatively later.

To solve the above-described problem, a drying device capable of controlling the evaporation rate of the solvent so that the inside and outside of the electrode active material slurry are uniformly dried are being considered, but the drying device is very expensive and require considerable cost and time to operate, and thus, it is disadvantageous in terms of manufacturing processibility.

On the other hand, the solvent contained in the typical electrode active material slurry is N-methyl-2-pyrrolidone (NMP), which has a high boiling point, and requires high heat energy and a very long drying process for drying, and thus, it is very disadvantageous for mass production. In addition, N-methyl-2-pyrrolidone (NMP) is a toxic substance and is harmful to living organisms, and thus, it has the disadvantage of being unfriendly.

Thus, researches on a dry electrode that manufactures an electrode without using a solvent have been actively conducted recently. The dry electrode is generally manufactured by laminating a free-standing type dry electrode film containing an electrode active material, a binder, a conductive material, etc., and manufactured in a sheet form onto a current collector. The dry electrode film is manufactured through a process of first mixing the electrode active material, a carbon material as the conductive material, and the fiberizable binder together using a blender or the like, applying shear force through a process such as kneading to fiberize the binder, and then calendering the obtained mixture into a film shape to manufacture a free-standing film.

The mixture including the active material and the binder may undergo a pre-mixing process before being laminated onto the current collector. If the pre-mixing is not performed properly, stains may appear on a surface of the electrode, or the electrode may not be formed uniformly to cause a problem in which a voltage is not generated consistently when the secondary battery is formed. Furthermore, if a predetermined binder is not fiberized in the pre-mixing process, a problem in which the mixture is completely in a powder state, and the kneading is not performed in the kneading stage, may occur. Thus, it is necessary to determine whether the mixture is mixed to a desired degree in the pre-mixing process.

In addition, the dry electrode needs to be kneaded to the required degree during the kneading process. When the dry electrode is kneaded too much or too little, strength of the dry electrode may be weakened to cause a problem of being broken. Thus, it is necessary to determine a degree of the kneading of the dry electrode so that the dry electrode is kneaded to the required degree.

## DISCLOSURE OF THE INVENTION

### TECHNICAL PROBLEM

The present invention has been made to solve the above problems, and an object of the present invention is to provide a mixing system including a kneading system capable of easily determining a degree of kneading and a pre-mixing system configured to mix a mixture including an active material and a binder, a method for manufacturing an electrode performed using the same, and an electrode formed using the same.

The technical objects to be achieved in this document are not limited to the aforementioned technical objects, and unmentioned other technical objects will be clearly understood by a person having ordinary skill in the technical field to which the present disclosure belongs from the description below.

### TECHNICAL SOLUTION

In a mixing system including a pre-mixing system and a kneading system according to an embodiment of the present invention, the kneading system may include: a kneading device configured to knead a mixture including an active material and a binder; a first sensor device configured to detect brightness of the mixture; and a first controller configured to determine at least one of crystallinity of the binder and elongation at break of the mixture based on brightness information of the mixture, which is detected by the first sensor device.

The first sensor device of the kneading system may include a colorimeter, and the brightness information of the mixture may be defined as a value L of the colorimeter.

The crystallinity of the binder of the kneading system may be defined as X, and the controller may be configured to determine the crystallinity of the binder by following [Equation 1].

$$[Equation\ 1]$$
$$(X) = -A*(L) + B$$
$$3.4<A<3.5,\ 110<B<120$$

The crystallinity of the binder of the kneading system may be defined as X, and the first controller may be configured to determine the crystallinity of the binder by following [Equation 2].

$$[Equation\ 2]$$
$$X = -3.47L + 115.4$$

The first controller of the kneading system may be configured to determine that the crystallinity of the binder is 16% or more and less than 18% based on the value L being 28 or more and 28.7 or less.

The kneading device of the kneading system may include: a kneading case configured to accommodate the mixture; a kneading cam configured to rotate inside the kneading case and configured so that the mixture is pressed between the kneading cam and the kneading case; and a driving device configured to apply driving force to the kneading can so as to rotate the kneading cam, wherein the first controller may be configured to control the driving device based on the crystallinity of the binder.

The first controller of the kneading system may be configured to control the kneading device so that the kneading is stopped, based on the determination that the crystallinity of the binder is within a preset range.

The first controller of the kneading system may be configured to the kneading device so that the mixture is discharged from the kneading device, based on the determination that the crystallinity of the binder is within a preset range.

In the kneading system, the preset crystallinity of the binder may be 10% to 20%.

In the kneading system, the preset crystallinity of the binder may be 17% to 18%.

The first controller of the kneading system may be configured to control the kneading device so that the mixture is added to the kneading device, based on the determined crystallinity being less than 20%.

The first controller of the kneading system may be configured to control the kneading device so that the kneading of the mixture proceeds, based on the crystallinity exceeding 20%.

The binder may have a brighter color than that of the active material.

In the kneading system, the active material may have a black color, and the binder may have a white color.

In the kneading system, the mixture may be a dry type that does not contain a solvent.

The kneading device of the kneading system may be a kneading case configured to accommodate the mixture and may include a first measuring part configured to enable the first sensor device to detect the inside.

The first measuring part may be transparent or translucent.

The first sensor device of the kneading system may be adjacent to the first measuring part.

The first measuring part of the kneading system may be defined as a hole through which the mixture passes.

The kneading device of the kneading system may further include a shutter configured to cover the measuring part, the shutter being movable to an opened position, at which the measuring part is exposed, and a closed position, at which the measuring part is covered.

The first measuring part may be provided at a position at which the mixture is kneaded.

The kneading device of the kneading system may further include a kneading cam configured to rotate inside the kneading case, wherein the kneading cam may be provided to press the mixture disposed between the kneading case and the kneading cam by the rotation.

In the kneading system, a kneading gap in which the mixture is disposed may be formed between the kneading cam and an inner wall of the kneading case, and the first measuring part may be disposed at a portion facing the kneading gap.

The first measuring part of the kneading system may extend in a circumferential direction with respect to a rotation axis of the cam.

The first measuring part may be disposed at an opposite side of a gravity direction with respect to a rotational center of the kneading cam.

The kneading case of the kneading system may extend in one direction, the kneading cam may be provided in plurality to move the mixture along the extension direction of the kneading case, wherein the plurality of kneading cams may be arranged in the extension direction of the kneading case, the first measuring part may be provided in plurality, which are arranged in a longitudinal direction of the kneading case, and the first sensor device may be provided in plurality, which correspond to the first measuring parts, respectively.

The kneading cam may be provided as a pair at left and right sides, the kneading case may be configured so that the pair of kneading gaps are provided to correspond to the pair of the kneading cams, respectively, and the first measuring part may be disposed at at least one of portions of the pair of kneading cases corresponding to the pair of the kneading gaps.

The kneading case may be configured to accommodate the pair of kneading cams and configured so that spaces, in which the pair of kneading cams are disposed, communicate with each other.

The pre-mixing system may include: a pre-mixing device configured to accommodate and mix the mixture containing the active material and the binder; a second sensor device configured to sense information about the brightness of the mixture; and a second controller configured to determine a degree to which the mixture is mixed based on the brightness information of the mixture obtained by the second sensor device.

The second sensor device of the pre-mixing system may include a colorimeter, the information about the brightness of the mixture may be defined as a value L of the colorimeter, and the second controller may be configured to determine the degree of the mixing of the mixture based on the value L of the mixture obtained by the second sensor device.

In the pre-mixing system, the second controller may be configured to determine whether to knead the mixture based on the determined degree of the mixing of the mixture.

The pre-mixing device may include: a mixing case configured to accommodate the mixture; and a stirrer configured to mix the mixture inside the mixing case, wherein the second controller may be configured to control whether to stop the stirrer based on whether the brightness of the mixture is in a predetermined range.

In the pre-mixing system, the second controller may be configured to determine completion of the mixing based on the value L of the mixture being 30 or more and 40 or less.

In the pre-mixing system, the second controller may be configured to determine completion of the mixing based on the value L of the mixture being 34 or more and 36 or less.

In the pre-mixing system, the second controller may be configured to determine the degree to which the mixture is mixed based on the brightness information of the plurality of mixtures.

In the pre-mixing system, the second controller may be configured to determine the degree of the mixing of the mixture based on the brightness information of the plurality of the mixtures measured at different times.

In the pre-mixing system, the second controller may be configured to determine the degree of the mixing of the mixture based on the brightness information of the plurality of mixtures measured at different positions.

The second sensor device of the pre-mixing system may include a colorimeter, the information about the brightness of the mixture may be defined as a value L of the colorimeter, and the second controller may be configured to determine the completion of the mixing based on an average of values L of the plurality of the mixtures, which are obtained by the second sensor device being 34 or more and 36 or less.

The second sensor device of the pre-mixing system may include a colorimeter, the information about the brightness of the mixture may be defined as a value L of the colorimeter, and the second controller may be configured to determine the completion of the mixing based on a standard deviation of values L of the plurality of the mixtures obtained by the second sensor device being disposed within a predetermined range.

The pre-mixing device may include: a mixing case configured to accommodate the mixture; and a stirrer configured to mix the mixture inside the mixing case, wherein the mixing case may include a second measuring part configured to detect the inside of the second sensor device.

The second measuring part may be transparent or translucent.

The second measuring part may be configured to be provided at a disposed at which the mixture is in contact with the second measuring part.

A method for manufacturing an electrode according to an embodiment of the present invention may include: a preparation process of preparing a mixture including an active material and a binder; a process of kneading the mixture including the active material and the binder; a first detection process of detecting brightness of the mixture by a value L of a colorimeter; and a first determination process of determining crystallinity of the binder based on the brightness information of the mixture.

In the first detection process or the first determination process, the brightness information of the mixture may be defined as the value L of the colorimeter.

The crystallinity of the binder may be defined as X, and the first determination process of determining the crystallinity of the binder may include a process of determining the crystallinity by following [Equation 1].

$$[Equation\ 1]$$

$$(X) = -A*(L) + B$$

$$3.4<A<3.5,\ 110<B<120$$

The first determination process of determining the crystallinity of the binder may include a process of determining that the crystallinity of the binder is 16% or more and less than 18% based on the value L being 28 or more and 28.7 or less.

The method may further include: a mixing process of mixing the mixture; a second detection process of sensing the brightness information about the mixture; and a second determination process of determining a degree of the mixing of the mixture based on the sensed brightness information about the mixture.

The second detection process may be performed by a colorimeter, and the second determination process may be provided to determine the degree of the mixing of the mixture based on the value L of the mixture obtained by the colorimeter.

The second determination process may be provided to determine strength of the electrode formed by the mixture based on the brightness information of the mixture.

The method may further include a mixing termination process for terminating the mixing based on the value L of the mixture being 34 or more and 36 or less.

An electrode according to an embodiment of the present invention includes: a mixture manufactured by the mixing system of claim 1 or the method for manufacturing the electrode of claim 43; and a current collector to which the mixture is applied, wherein the mixture may include an active material having a weight ratio of 80% or more and 98% or less, a conductive material having a weight ratio of 0.5% or more and 5% or less, and a binder having a weight ratio of 0.5% or more and 10% or less, wherein a value L of a colorimeter of the mixture may be 34 or more and 36 or less.

## ADVANTAGEOUS EFFECTS

The kneading device according to the present invention may include the measuring part configured to enable the sensor device to detect the inside, thereby making it easy to determine the degree of kneading.

The kneading device and the kneading system according to the present invention may easily determine the degree of the kneading in real time and thus may easily control the degree of the kneading.

The kneading device and the kneading system according to the present invention may prevent the mixture from being scattered to the outside while checking the degree of the kneading of the mixture.

The kneading device and the kneading system according to the present invention may produce the electrode having the high mechanical strength.

The pre-mixing system according to the present invention may easily determine the degree of the mixing of the mixture by determining the degree of the mixing of the mixture based on the brightness information of the mixture obtained by the sensor device.

The pre-mixing system according to the present invention may prevent the mixture from being scattered to the outside of the pre-mixing device by indirectly measuring the degree of the mixing of the mixture without directly collecting the mixture.

The pre-mixing system according to the present invention may accurately measure the degree of the mixing of the mixture by sensing the mixture adjacent to the stirrer.

The desired electrode may be manufactured through the method for manufacturing the electrode, which is performed by the pre-mixing system or the kneading system according to the present invention.

The electrode formed by the method for manufacturing the electrode of the present invention may have the sufficient strength.

The effects obtainable from the present invention are not limited to the effects mentioned above, and other effects not mentioned will be clearly understood by those skilled in the art to which the present disclosure pertains from the description below.

## BRIEF DESCRIPTION OF THE DRAWINGS

FIG. 1 is an assembly view of a secondary battery, which illustrates a process of assembling an electrode assembly with a battery case according to a first embodiment of the present invention.
FIG. 2 is a cross-sectional view of an electrode stack illustrated in FIG. 1.
FIG. 3 is a flowchart illustrating a method for manufacturing the electrode stack illustrated in FIG. 2.
FIG. 4 is a conceptual view illustrating a state before and after an electrode illustrated in FIG. 2 is kneaded.
FIG. 5 is a perspective view illustrating a kneading device configured to knead the electrode illustrated in FIG. 2.
FIG. 6 is a cross-sectional view of the kneading device illustrated in FIG. 5.
FIG. 7 is a cross-sectional view of a kneading device according to a second embodiment of the present invention.
FIG. 8 is a cross-sectional view of a kneading device according to a third embodiment of the present invention.
FIG. 9 is a cross-sectional view of a kneading device according to a fourth embodiment of the present invention.
FIG. 10 is a cross-sectional view of a kneading device according to a fifth embodiment of the present invention.
FIG. 11 is a cross-sectional view of a kneading device according to a sixth embodiment of the present invention.
FIG. 12 is a control block diagram of a kneading system according to a seventh embodiment of the present invention.
FIG. 13 is a flowchart illustrating a method for controlling the kneading system according to the seventh embodiment of the present invention.
FIG. 14 is a flowchart illustrating a method for controlling a kneading system according to an eighth embodiment of the present invention.
FIG. 15 is a flowchart illustrating a method for controlling a kneading system according to a ninth embodiment of the present invention.
FIG. 16 is a perspective view illustrating a pre-mixing device configured to mix a mixture illustrated in FIG. 4.
FIG. 17 is a cross-sectional view of the pre-mixing device illustrated in FIG. 16.
FIG. 18 is a control block diagram of a pre-mixing system according to a tenth embodiment of the present invention.
FIG. 19 is a flowchart illustrating a method for manufacturing an electrode according to the tenth embodiment of the present invention.
FIG. 20 is a flowchart illustrating a determination process in a method for manufacturing an electrode according to an eleventh embodiment of the present invention.
FIG. 21 is a flowchart illustrating a method for manufacturing an electrode according to a twelfth embodiment of the present invention.
FIG. 22 is a flowchart illustrating a determination process in a method for manufacturing an electrode according to a thirteenth embodiment of the present invention.
FIG. 23 is a cross-sectional view of a pre-mixing device according to a fourteenth embodiment of the present invention.
FIG. 24 is a cross-sectional view of a pre-mixing device according to a fifteenth embodiment of the present invention.

## MODE FOR CARRYING OUT THE INVENTION

Hereinafter, with reference to the accompanying drawings, embodiments of the present invention will be described in detail to facilitate the practicing by one of ordinary skill in the art to which the present invention belongs. the present invention may be implemented in various different forms, and is not limited or restricted by the embodiments described herein below.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

In addition, the terms and words used in the specification and claims should not be construed as limited to their ordinary or dictionary meanings, but should be construed as meanings and concepts consistent with the technical idea of the present invention based on a principle that an inventor may appropriately define the concepts of terms in order to explain his or her invention in the best way.

It should be understood that various embodiments of this document and the terminology used herein are not intended to limit the technical features described in this document to a specific embodiment, but rather to include various modifications, equivalents, or alternatives of the embodiment.

Regarding to the descriptions of the drawings, the similar reference numerals may be used for similar or related components.

The singular form of a noun corresponding to an item may include one or more of the items, unless the context clearly indicates otherwise.

In this document, each of the phrases "A or B", "at least one of A and B", "at least one of A or B", "A, B, or C", "at least one of A, B, and C", and "at least one of A, B, or C" may include any one of the items listed together in that phrase, or all possible combinations of them.

The term "and/or" includes any combination of a plurality of related described elements or any one of the plurality of related described elements.

Terms such as "first", "second", "primary", "secondary", "A", "B", "(a)" or "(b)" may be used merely to distinguish one element from another element and do not limit the elements in any other respect (e.g., importance or order).

When a component (e.g., a first component) is referred to as being "connected" or "coupled" to another component (e.g., a second component), with or without the terms "functionally" or "communicatively," it means that the component may be connected to the other component directly (e.g., wired or wirelessly) or through a third component.

The meaning of 'include' or 'comprise' specifies a property, a fixed number, a step, an operation, an element, a component or a combination thereof, which are disclosed in this document, but does not exclude other properties, fixed numbers, steps, operations, elements, components or combinations thereof.

When any component is referred to be "connected," "coupled," "supported," or "contacted" with another component, this includes not only a case in which the components are directly connected, coupled, supported, or contacted, but also a case in which the components are indirectly connected, coupled, supported, or contacted through a third component.

When any component is referred to be disposed "on" another component, this includes not only a case in which the component is in contact with the other component, but also a case in which there is another component between the two components.

The terms "upper and lower direction," "lower side," and "front and rear direction" used in the following description are defined based on the drawing, and the shape and position of each component are not limited by the terms.

Hereinafter, an embodiment of the present invention will be described with reference to the accompanying drawing.

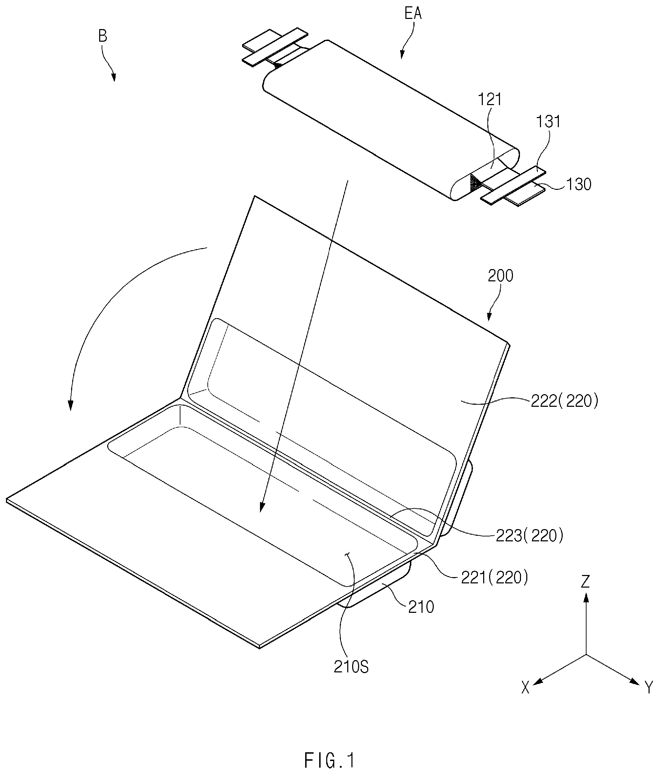

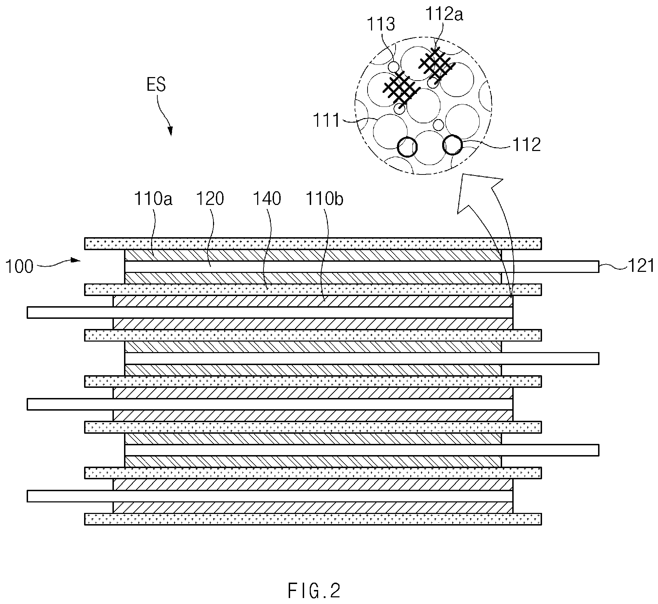

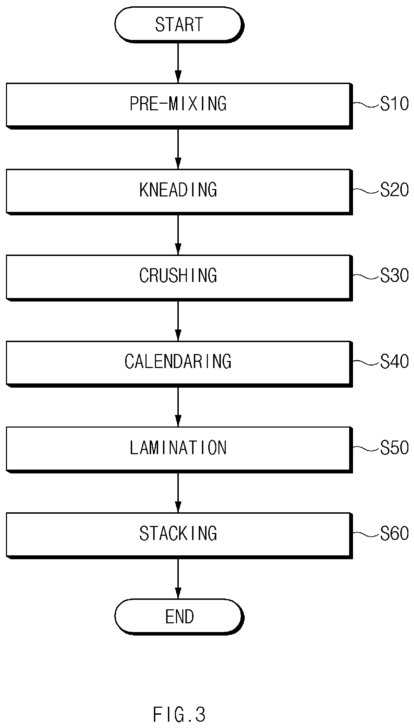

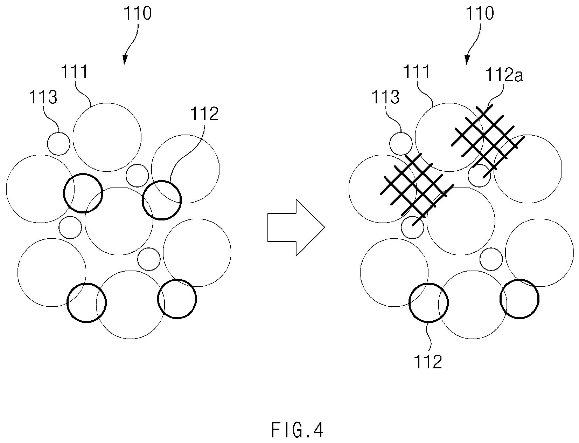

FIG. 1 is an assembly view of a secondary battery B, which illustrates a process of assembling an electrode assembly EA with a battery case 200 according to a first embodiment of the present invention. FIG. 2 is a cross-sectional view of an electrode stack ES illustrated in FIG. 1. FIG. 3 is a flowchart illustrating a method for manufacturing the electrode stack ES illustrated in FIG. 2. FIG. 4 is a conceptual view illustrating a state before and after an electrode 100 illustrated in FIG. 2 is kneaded.

Referring to FIGS. 1 to 4, the secondary battery B according to a first embodiment of the present invention will be described.

As illustrated in FIG. 1, the secondary battery B for generating electricity may be provided. The secondary battery B may include an electrode assembly EA and/or a battery case 200 accommodating the electrode assembly EA. The type of secondary battery B may be determined according to a shape or type of the battery case 200. For example, if the battery case 200 has a cylindrical shape, the secondary battery B may be called a cylindrical type secondary battery B, and if the battery case 200 have a prismatic shape, the secondary battery B may be called a prismatic type secondary battery B. If the battery case 200 is manufactured using a pouch film, the secondary battery B may be called a pouch-type secondary battery B. The drawings of the present disclosure and the following description assume that the secondary battery B is the pouch-type secondary battery B. However, the idea of the present invention may still be applied not only to the case in which the secondary battery B is the pouch-type secondary battery B, but also to the case of types such as the cylindrical type secondary battery B and the prismatic type secondary battery B.

Here, the electrode assembly EA may be an assembly which includes an electrode 100 described below and in which components related to the electrode 100 are assembled together. The electrode 100 may be a composition including a reactant that reacts to generate electricity. The battery case 200 may protect the electrode assembly EA from an impact by covering the electrode assembly EA. The electrode assembly EA may require an electrolyte to allow ions to move as described below in order to generate electricity. The battery case 200 may accommodate the electrolyte together with the electrode assembly EA to provide the electrolyte to the electrode assembly EA. Furthermore, the electrolyte may generally mean a liquid electrolyte, but is not limited thereto, and the idea of the present invention may also be applied to a solid electrolyte.

As illustrated in FIG. 1, the battery case 200 may be manufactured by the pouch film. As an example of the battery case 200, the battery case 200 of the pouch-type secondary battery B is described.

The pouch film forming a pouch, which is an example of the battery case 200, may include a plurality of layers. The pouch film may include a sealant layer and a barrier layer disposed outside the sealant layer. The pouch film may include a surface protection layer disposed outside the barrier layer. Here, the sealant layer may be made of a polymer material such as polypropylene, the barrier layer may be made of a metal material such as aluminum, and the surface protection layer may be made of a polymer material such as nylon. Here, fusion described later may mean that the facing pouch films are coupled as the facing sealant layers are melted.

The pouch may be manufactured using a flexible material to accommodate the electrode assembly EA therein. When the flexible pouch film is drawn to be molded using a punch (not shown) or the like, a portion thereof may be stretched to form an accommodation part 210 having a pocket-shaped electrode accommodation space 210S, thereby manufacturing the pouch. The pouch may accommodate and seal the electrode assembly EA so that a portion of the electrode lead 130 is exposed.

When molding the accommodation part 210 on the pouch film, only one accommodation part 210 may be formed in one pouch film, but is not limited thereto, and two accommodation parts 210 may be drawn and molded adjacent to each other in one pouch film. Then, two adjacent accommodation parts 210 may be formed. The accommodation parts 210 may have the same depth, but is not limited thereto, and depths of the accommodation parts 210 may be different from each other. After the electrode assembly EA is accommodated in one accommodation part 210, the pouch may be folded around an axis so that another accommodation part 210 faces the accommodation part 210. Thus, another accommodation part 210 may accommodate the electrode assembly EA from an upper side. Since two accommodation parts 210 accommodates one electrode assembly EA, the electrode assembly EA having a thicker thickness may be accommodated than when there is only one accommodation part 210. In addition, since the pouch is folded, each side part 220 may be connected integrally to form a folding part 223, and thus, when performing a sealing process later, the number of sides to be sealed may be reduced. Thus, a process speed may be improved, and the number of sealing processes may be reduced. For convenience of explanation, the battery case 200 described below is described to assume that two accommodation parts 210 are formed in one pouch film.

The side part 220 may include a lead sealing part 221 configured to be disposed corresponding to an electrode lead 130 and a degassing part 222 connected to the lead sealing part 221. First, the lead sealing part 221 may be fused to be sealed. Thereafter, the electrolyte may be injected into the electrode accommodation space 210S through the degassing part 222 that has not yet been sealed, and the degassing part 222 may be fused to be sealed. Thereafter, an activation process may be performed, and when a gas generated through the activation process moves to the inside of the degassing part 222, a degassing process for removing a remaining gas may be performed. After sealing the degassing part 222 again, a trimming process may be performed to cut an unnecessary portion so that the degassing part 222 has a predetermined width. Thereafter, the degassing part 222 may be folded to reduce the width, thereby forming the folding part 223.

As illustrated in FIG. 2, the electrode assembly EA may be formed by alternately stacking an electrode 100 and a separator 140. The electrode 100 may be manufactured by applying a mixture 110 containing an active material 111, a binder 112, a conductive material 113, etc., to a current collector 120. Depending on the type of active material 111, the electrode 100 may be a positive electrode 100 or a negative electrode 100. The positive electrode 100 and the negative electrode 100 may interact with each other to generate electricity. More specifically, for example, the active material 111 contained in the positive electrode 100 may include lithium, and the active material 111 contained in the negative electrode 100 may include graphite. Lithium ions may move to the positive electrode 100 or the negative electrode 100 depending on charging or discharging of the secondary battery B, and the electricity may be generated during this process. The configuration of the electrode assembly EA is described in more detail below.

The electrode 100 may include the current collector 120 and the mixture 110 applied or combined to the current collector 120. For example, as illustrated in FIG. 2, the mixture 110 may be applied to both surfaces of the current collector 120. Here, the current collector 120 may be, for example, a thin metal. The type of metal may vary depending on a polarity of the electrode 100. As illustrated in FIG. 2, the electricity may be generated by, for example, lithium moving between a positive electrode mixture 110a and a negative electrode mixture 110b, which face each other, with the separator 140 therebetween. Here, the separator 140 may be configured to allow lithium to pass therethrough. The generated electricity may move through the current collector 120. The current collector 120 may have an electrode tab 121 at one end on which the active material 111 is not disposed.

The plurality of electrodes 100 may be alternately stacked with the separator 140 to form the electrode stack ES.

An electrode lead 130 may be provided to gather each electrode tab 121 of the plurality of electrodes 100 provided in the electrode stack ES. The electrode tabs 121 having the same polarity may be gathered, and the electrode leads 130 may be coupled to portions of the gathered electrode tabs 121. For example, as illustrated in FIG. 1, the plurality of electrode tabs 121 having a positive polarity may be disposed at a front side, the plurality of electrode tabs 121 having a negative polarity may be disposed at a rear side, and the electrode tabs 121 having the positive polarity may welded to be coupled, and then, the electrode lead 130 may be coupled to an end of the welded electrode tab 121 by welding or the like. The electrode tab 121 having the negative polarity may also be formed through the same process as the electrode tab 121 having the positive polarity. As above, the generated electricity may move from the electrode assembly EA to the outside of the electrode assembly EA through the electrode tab 121 and the electrode lead 130. The electrode lead 130 may have one end connected to the electrode tab 121 and the other end protruding outward from the battery case 200. Thus, a component requiring electricity may obtain electricity from the secondary battery B by being in contact with the electrode lead 130.

As illustrated in FIG. 1, the electrode assembly EA may include an insulating part 131 surrounding a portion of the electrode lead 130. The insulating part 131 may be disposed to correspond to the position at which the side part 220 described later is fused. The insulating part 131 may be disposed between the side parts 220 when the opposing side parts 220 are fused to each other to allow the electrode lead 130 to adhere to the pouch. In addition, it is possible to prevent the electricity generated from the electrode assembly EA from flowing into the pouch through the electrode lead 130 and maintain the sealing of the pouch. Thus, the insulating part 131 may be made of a non-conductive material that does not conduct electricity well. For example, the insulating part 131 may be an insulating tape that is easy to be attached to the electrode lead 130 and has a relatively thin thickness. However, without limitation thereto, various materials may be used as long as the electrode lead 130 is insulated.

As described above, when the mixture 110 contains a solvent, it is necessary to evaporate the solvent. During a process of drying the mixture 110, as the solvent contained in the mixture 110 is evaporated, defects such as pinholes or cracks may be induced in the mixture 110 formed on the current collector 120. In addition, since the inside and outside of slurry of the active material 111 of the electrode 100 are not uniformly dried during the drying process, there is a concern that a quality of the electrode 100 is deteriorated due to powder a floating phenomenon caused by a difference in solvent evaporation rate, that is, because powder of a portion that is dried first ascends to form a gap with a portion that is dried relatively later.

To solve the above-described problem, a drying device capable of controlling the evaporation rate of the solvent so that the inside and outside of the slurry of the active material 111 of the electrode 100 are uniformly dried are being considered, but the drying device is very expensive and require considerable cost and time to operate, and thus, it is disadvantageous in terms of manufacturing processibility.

On the other hand, the solvent contained in the mixture 110 including the typical solvent is N-methyl-2-pyrrolidone (NMP), which has a high boiling point, and requires high heat energy and a very long drying process for drying, and thus, it is very disadvantageous for mass production. In addition, N-methyl-2-pyrrolidone (NMP) is a toxic substance and is harmful to living organisms, and thus, it has the disadvantage of being unfriendly.

To solve this problem, the dry electrode 100 manufactured using the active material 111 that does not use the solvent may be provided. The electrode 100 described in the present disclosure may be viewed as the dry electrode 100 manufactured using the mixture 110 that does not use the solvent. Alternatively, it is considered that a kneading process used below is also applied to the electrode 100 that processes the mixture 110.

The dry electrode 100 may be manufactured typically through following processes. As illustrated in FIG. 3, the dry electrode 100 may be manufactured through a pre-mixing process (S10), a kneading process (S20), a crushing process (S30), a calendaring process (S40), a lamination process (S50), and/or a stacking process (S60).

First, the mixture 110 including the active material 111, the conductive material 113, and/or the binder 112 may be prepared to form the dry electrode 100. Particularly, the binder 112 may form fibers as a crystallized structure is destroyed. The fibers formed by the destruction of the binder 112 may bind the active materials 111 to each other. A degree of the destruction of the crystallized structure of the binder 112 may be explained by a degree of crystallinity or fiberization. Here, the crystallinity of the binder 112 may refer to a ratio of the binder 112 having the crystallized structure among the entire binder 112, and the fiberization of the binder 112 may refer to a ratio of the fiberized binder 112 among the entire binder 112.

The pre-mixing process (S10) may be a process of evenly mixing the mixture 110. For example, when the active material 111, the conductive material 113, and/or the binder 112 are provided in the form of powder, a difference in quality according to the position of the completed electrode 100 may be prevented by evenly mixing the powder.

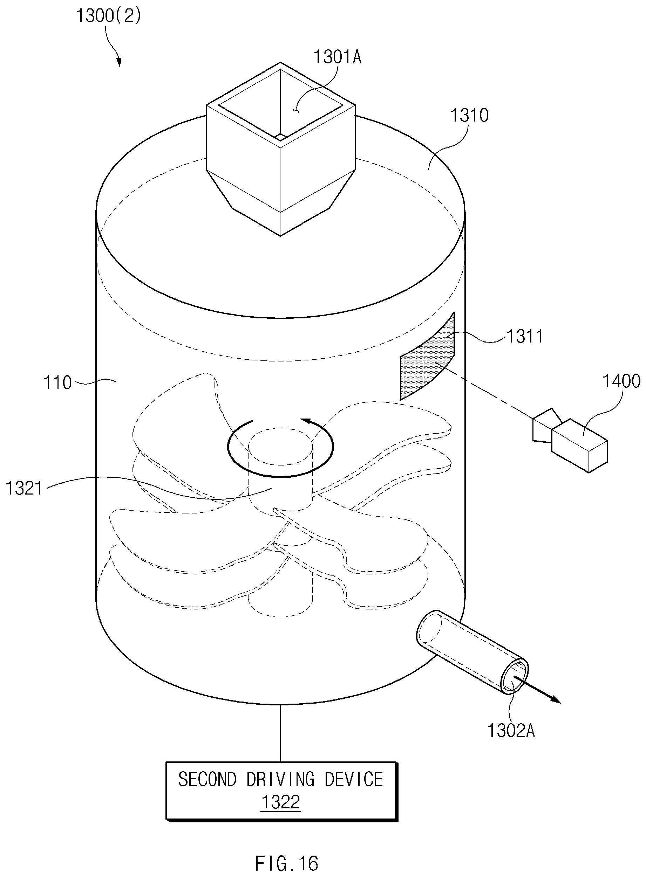

For reference, the pre-mixing process (S10) may be performed by a pre-mixing device 1300, as illustrated in FIG. 16. The pre-mixing device 1300 may mechanically mix the mixture by a stirrer 1321 disposed inside the mixing case 1310. Since the mixture 110 is pressed by the stirrer 1321, a portion of the crystals of the binder 112 included in the mixture 110 may be broken, and thus, the fiberization may proceed. In addition, it may be necessary for a portion of the binder 112 to be fiberized in the pre-mixing process (S10).

If the fiberization of the binder 112 does not occur in the pre-mixing process (S10), it may be difficult to knead the mixture 110 in the kneading process (S20) described later. Before performing the pre-mixing process (S10), the mixture 110 may be prepared in a powder state. This is because the active material 111, the binder 112, and the conductive material 113 mentioned above are generally prepared in the powder state. Since the mixture 110 for manufacturing the dry electrode does not contain the solvent, there may be no factor that causes the mixture 110 to stick together. If the kneading process (S20) is performed on the mixture 110 in this powder state, the kneading process (S20) may apply shear force to the mixture 110 to break the crystals of the binder 112 and to proceed with the fiberization. However, if the shear force is applied to the mixture 110, particles of the powder mixture 110 may move while being separated from each other, and the crystals of the binder 112 may not be broken easily. If the fiberization of the binder 112 has progressed to some extent in the pre-mixing process (S10), the mixture 110 may stick together in a state like clay, for example, and in this case, when the shear force is applied to the mixture 100, the binder 112 may not move due to the applied shear force, but the crystals may be broken, and thus, the fiberization may occur. Thus, in order for the mixture 110 to be kneaded, a portion of the binder needs to be fiberized.

In other words, the pre-mixing process (S10) may be performed for following two purposes. A first process is to mix the mixture 110 evenly. A second process is to induce the fiberization of the binder 112 of the mixture 110 to proceed with the kneading process (S20). Thus, the mixing of the mixture 110 may be important as a condition for improving the quality of the electrode 100 or enabling the production of the electrode 100. In addition, the mixing here may not only mean simply mixing, but may also mean that a portion of the binder 112 of the mixture 110 is appropriately fiberized.

The kneading process (S20) may refer to a process of fiberizing the binder 112 by destroying the crystallized structure of the binder 112 mentioned above, as illustrated in FIG. 4. Here, the kneading may mean applying a pressure to a structure. The fiberization of the binder 112 determined in the kneading process may determine mechanical strength of the active material 111. It may be desirable for the binder 112 to have the degree of the crystallinity or fiberization, which has a predetermined range of values. If the fiberization of the binder 112 is too little, it may be difficult to couple the mixtures 110 to each other, and if the fiberization of the binder 112 is too much, fibers may become thin and be broken, and the physical properties, such as the strength of the free-standing film manufactured by the calendaring process (S40) described below, may be weakened. The active material 111 that has completed the kneading process (S20) may have the form of a dough that is clumped together like clay. Particularly, with reference to FIG. 4, the circular crystallized binder 112 may be transformed into a mesh-shaped fibrous binder 112a as the crystals are disintegrated.

The crushing process (S30) may refer to a process of crushing the active material 111 that has been formed into the dough shape by completing the kneading process (S20) into a smaller size. The active material 111 in the form of dough may be too large to be placed on a roller to perform the calendaring process (S40) described later. The crushing process (S30) may be a process of cutting the active material 111 into an appropriate size to perform the subsequent calendaring process (S40).

The calendaring process (S40) may refer to a process of manufacturing the free-standing film by thinly spreading the active material 111 crushed in the pulverizing process (S30). For example, the free-standing film, which is the thinly spread active material 111, may be manufactured by placing the active material 111 between the rollers and compressing the active material 111 through the rollers.

The lamination process (S50) may refer to a process of coupling the free-standing film formed by the calendaring process (S40) to the current collector 120. The electrode 100 may be manufactured through the lamination process (S50). Particularly, the electrode may be called the dry electrode 100 since the electrode does not contain a solvent or contains a very small amount of solvent.

The stacking process (S50) may be a process of forming a completed electrode stack ES by stacking semi-finished products manufactured in the lamination process (S40). The electrodes 100 formed by the above processes may be provided in plurality and alternately stacked with the separator 140 to form the electrode assembly EA, as shown in FIG. 2.

Here, as mentioned above, if the pre-mixing process (S10) is performed, the binder 112 may be fiberized. However, the binder 112 may undergo full-scale fiberization in the kneading process (S20) that follows the pre-mixing process (S10), and in the pre-mixing process (S10), the binder 112 needs to be fiberized so as to be kneaded in the full-scale kneading process (S20). Furthermore, in the kneading process (S20), the fiberization of the binder 112 of the mixture 110 may be set as an input condition within a predetermined range. When considering the above, the pre-mixing process (S10) needs to be controlled so that the mixture 110 is mixed is mixed uniformly, and a portion of the binder 112 of the mixture 110 is fiberized. This is described in detail below. In addition, a pre-mixing device 1300 may be provided to mix the mixture 110.

In addition, the kneading process (S20) may determine the mechanical strength of the electrode 100, and thus, it is necessary to control the degree to which the binder 112 is kneaded. This is described in detail below. In addition, a kneading device 300 may be provided to control the degree of the kneading.

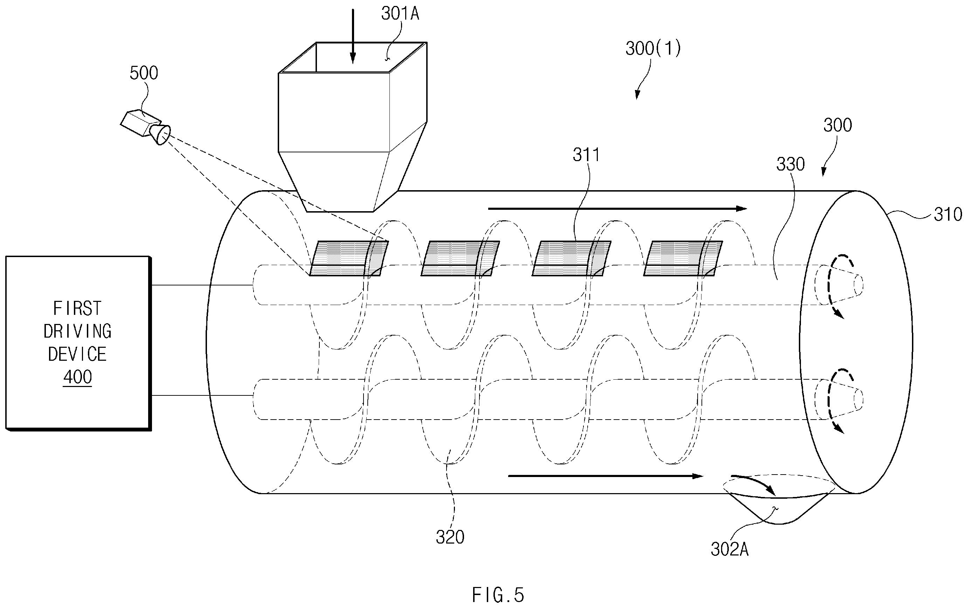

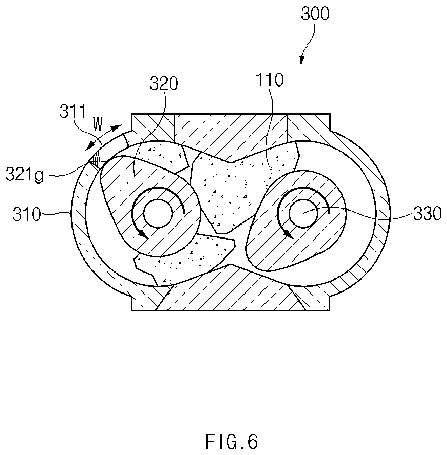

FIG. 5 is a perspective view illustrating the kneading device configured to knead the electrode illustrated in FIG. 2. FIG. 6 is a cross-sectional view of the kneading device illustrated in FIG. 5.

Referring to FIGS. 5 and 6, the kneading device 300 according to an embodiment of the present invention will be described. The mixing system of the present invention may include a pre-mixing system 2 and a kneading system 1.

As illustrated in FIG. 5, the kneading device 300 for kneading the mixture 110 may be provided. The mixture 110 may be introduced into the kneading device 300 through an inlet 301A of the kneading device 300. The mixture 110 introduced into the kneading device 300 may be kneaded by receiving a mechanical pressure. The mixture 110 in which the kneading is completed may be discharged to the outside of the kneading device 300 through an outlet 302A of the kneading device 300. The kneading may mean that a mechanical configuration is formed by pressing the mixture 110, or may mean that a pressure is applied to the mixture 110 even if it is not the mechanical configuration. Thus, although not shown in the drawings of the present disclosure, the kneading may also be referred to as pressing the mixture 110 using a high-pressure gas, such as jet milling.

For reference, the kneading device 300 here may include two types. The kneading device 300 may include a batch type kneading device 300 in which the outlet 302A is not opened while the kneading of the mixture 110 is in progress, and the outlet 302A is opened only after the kneading of the mixture 110 is completed. Alternatively, the kneading device 300 may include a continuous type kneading device 300 in which the mixture 110 moves toward the outlet 302A while the kneading is in progress, and the mixture 110 that has completed kneading is continuously discharged through the outlet 302A. The idea of the present invention is considered to include the above two types. Furthermore, it is believed that the idea of the present invention may still be applied to other types of kneading devices 300 within the scope to which the idea of the present invention may be applied.

It is also possible to measure the kneading of the discharged mixture 110 through the outlet 302A of the kneading device 300, but when measuring the kneading of the mixture 110 through this method, there is a problem in that the degree of the kneading of the discharged mixture 110 is not controlled. To solve this problem, the kneading system 1 includes a first sensor device 500 configured to detect the mixture 110, and the first sensor device 500 may detect the mixture 110 before being discharged to the outlet 302A, thereby enabling control of the degree of the kneading in advance. More specifically, the kneading system 1 may be configured to control the kneading in real time while the mixture 110 is being kneaded in the kneading device 300, and thus, the mixture 110 may be properly kneaded. In other words, information about the kneading state may be acquired in an on-line or in-line state of the kneading device 300.

Particularly, when the kneading device 300 is the continuous type kneading device 300, the mixture 110 may be kneaded depending on a direction in which the mixture 110 moves. For example, as illustrated in FIG. 5, when the mixture 110 moves from a left side to a right side, the mixture 110 disposed at the right side may be kneaded more than the mixture 110 disposed at the left side. Here, when the information on the kneading state is acquired from two different points, information on a kneading speed may be acquired by comparing measured distances between two different points and the degree of the kneading at the point disposed relatively to the left side and the degree of the kneading at the point disposed relatively to the right side among the two points.

For this, the kneading device 300 may include a kneading case 310 configured to accommodate the mixture 110, and the kneading case 310 may include a first measuring part 311 configured to enable the first sensor device 500 to detect the inside of the kneading case 310. Here, the first sensor device 500 may be disposed outside the kneading device 300 to detect the inside of the kneading case 310 through the first measuring part 311. For reference, the kneading case 310 may have a cylindrical space so that a cam 320 described below rotates or has a space in a shape of a plurality of cylinders overlapping each other so that a plurality of cams 320 rotate. Thus, the kneading case 310 may be formed to correspond to the shape of the space. That is, the kneading case 310 may have a substantially cylindrical shape, as schematically illustrated in FIG. 5 or may have a shape in which a plurality of cylindrical spaces overlap each other, as illustrated in FIG. 6.

However, the method by which the first sensor device 500 acquires the information on the mixture 110 may not be limited to a specific method.

For example, the first sensor device 500 may recognize the information about the mixture 110 by including a differential scanning calorimetry (DSC). When obtaining the information on the mixture 110 by the differential scanning calorimetry, the mixture 110 may be heated or cooled to measure a heat input/output to the mixture 110, thereby obtaining the information on the mixture 110. The method of acquiring the information on the mixture 110 by the differential scanning calorimeter is a commonly known method, so a detailed description thereof is omitted in this disclosure. However, since the method of acquiring the information on the mixture 110 by the differential scanning calorimeter proceeds by collecting the mixture 110 and injecting the mixture 110 into the differential scanning calorimeter, it is necessary to take a sample out of the outside of the kneading device 300. Typically, the mixture 110 acquired from the outlet 302A of the kneading device 300 may be injected into the differential scanning calorimeter to acquire information on the degree of the kneading of the mixture 110. However, as discussed above, analyzing of the mixture 110 acquired from the outlet 302A may cause a problem in that it is difficult to acquire the information about the kneading of the mixture 110 in real time in order to control the kneading in real time. Thus, the kneading device 300 needs to be provided to collect the mixture 110 in real time.

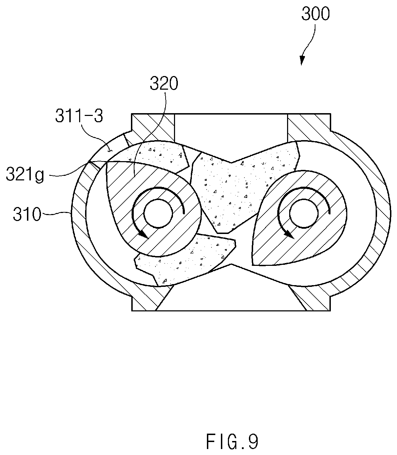

Thus, the first measuring part 311 may be defined as a hole through which the mixture 110 passes. This is described in more detail in the description of a third embodiment with reference to FIG. 9. When the first measuring part 311 is defined as a hole, the mixture 110 may be discharged outside the kneading device 300 through the hole. To prevent this problem, the kneading device 300 may include a shutter 312-1 as described below.

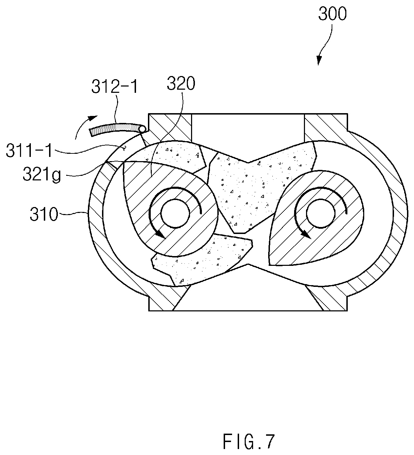

In other words, as illustrated in FIG. 7, the kneading device 300 may include a shutter 312-1 configured to cover the first measuring part 311. The shutter 312-1 may move to an opened position at which the first measuring part 311 is exposed and a closed position at which the first measuring part 311 is covered. The shutter 312-1 is described in more detail in a second embodiment with reference to FIG. 7.

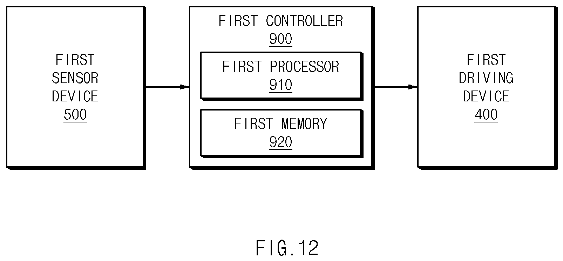

As another example, the first sensor device 500 may optically acquire the information about the mixture 110. The method of determining the degree of the kneading of the mixture 110 by acquiring optical information of the mixture 110 by the first sensor device 500 will be described in more detail in the description related to FIG. 12 below. Additionally, when the first sensor device 500 optically acquires the information about the mixture 110, a time for acquiring the information about the mixture 110 may be shortened because there is no need for time to heat and/or cool the mixture 110. Furthermore, when the first sensor device 500 optically acquires the information about the mixture 110, since the information about the mixture 110 is acquired in an indirect manner, there is no need to directly collect the mixture 110, and there is no need to move the mixture 110 to the outside of the kneading device 300. Thus, a risk of the mixture 110, which spills outside the kneading device 300 may be reduced.

In order for the first sensor device 500 to optically acquire the information about the mixture 110, the first measuring part 311 may be transparent or translucent, as illustrated in FIG. 6. Here, the transparent or translucent means that light passes therethrough. Thus, the transparent or translucent first measuring part 311 may mean that it is transparent or translucent if the first measuring part 311 has not only a characteristic that allows visible light to pass therethrough, but also a characteristic that allows infrared rays, ultraviolet rays, or light having other wavelengths to pass therethrough. However, for convenience of explanation, the first sensor device 500 may recognize light in a visible light range, and the first measuring part 311 may also recognize light that passes through visible light.

The first sensor device 500 may be adjacent to the first measuring part 311. As illustrated in FIG. 5, the first sensor device 500 may be disposed so as not to be in contact with the first measuring part 311, but when considering that the closer the first sensor device 500 is disposed to the first measuring part 311, the higher a resolution of the mixture 110 that is recognized through the first measuring part 311, the first sensor device 500 may be disposed to be in contact with the first measuring part 311, thereby increasing in resolution of the information about the mixture 110 acquired by the first sensor device 500. Furthermore, since the mixture 110 does not move outside the kneading device 300 through the first measuring part 311, even if the first sensor device 500 is in contact with the first measuring part 311 or is disposed close to the first sensor device 500 and the first measuring part 311, the mixture 110 may be prevented from splashing onto the first sensor device 500 through the first measuring part 311. Thus, even if the first sensor device 500 is placed adjacent to the first measuring part 311, a problem of contamination of the first sensor device 500 may be prevented from occurring.

The first measuring part 311 may be provided at a position at which the mixture 110 is kneaded. The position at which the mixture 110 is kneaded may be seen as a position at which the mixture 110 is pressed, and a portion at which the mixture 110 is pressed may be seen as having a higher probability of being more uniform than a portion where it is not. The first measuring part 311 may be provided at the position at which the mixture 110 is kneaded, and the first sensor device 500 may be seen as the pressed mixture 110 through the first measuring part 311, and thus, a more uniform mixture 110 may be measured to improve accuracy of the information on the mixture 110 acquired by the first sensor device 500.

Particularly, the position of the first measuring part 311 may be related to a manner in which the kneading device 300 performs the kneading. The kneading device 300 may include the cam 320 for kneading, as illustrated in FIG. 6. More specifically, the kneading device 300 may further include the cam 320 configured to rotate inside the kneading case 310. Here, the cam 320 is mounted on a cam shaft 330 to rotate and may be configured to be eccentric in one direction with respect to a rotation axis. The cam 320 may be provided in plurality to be coupled to one cam shaft 330, as illustrated in FIG. 5. The plurality of cams 320 coupled to one cam shaft 330 may be arranged along an extension direction of one cam shaft 330. Here, the cam shaft 330 may be provided as a pair, as illustrated in FIG. 5. However, without being limited thereto, one or more cam shafts 330 may be provided, and the plurality of cams 320 coupled to each cam shaft 330 may be provided. The cam 320 may be disposed to press the mixture 110 disposed between the kneading case 310 by rotation. In other words, the binder 112 may be disposed between the cam 320 and the kneading case 310 and be pressed by the cam 320 so that the crystal of the binder 112 is destroyed, and the fiberization of the binder 112 proceeds.

For reference, the cam 320 may rotate by the rotation of the cam shaft 330. The cam shaft 330 may rotate by the rotation of the first driving device 400. In other words, the kneading device 300 may include a first driving device 400 that generates driving force to rotate the cam 320. The first driving device 400 may be connected to the cam shaft 330 and may rotate the cam 320 by rotating the cam shaft 330. The first driving device 400 may be, for example, a motor, a hydraulic cylinder, etc. The first driving device 400 may be disposed outside the kneading case 310, as illustrated in FIG. 5, or may be disposed inside the kneading case 310.

Here, a kneading gap 321g in which the mixture 110 is disposed between the cam 320 and an inner wall of the kneading case 310 may be formed. The cam 320 may rotate while being in contact with the inner wall of the kneading case 310, but when the cam 320 is disposed to form a predetermined kneading gap 321g with the inner wall of the kneading case 310, the mixture 110 may be disposed in the kneading gap 321g to allow a larger amount of the mixture 110 to be kneaded.

The first measuring part 311 may be disposed at a portion facing the kneading gap 321g of the kneading case 310. The first measuring part 311 provided at the position at which the mixture 110 mentioned above is kneaded may face the kneading gap 321g in the above-mentioned specific configuration.

Particularly, the first measuring part 311 may extend in a circumferential direction w with respect to the rotation axis of the cam 320. Since the cam 320 rotates in the circumferential direction w about the rotation axis, and thus, the mixture 110 is kneaded in the circumferential direction w, as the first measuring part 311 extends in the circumferential direction w about the rotation axis of the cam 320, the mixture 110 may be observed for a long time through the first measuring part 311 while the mixture 110 is kneaded.

The first measuring part 311 may be disposed at an opposite side of a gravity direction with respect to a rotational center of the cam 320. When the first measuring part 311 is disposed in the gravity direction, a degree to which the mixture 110 is dispersed may be reduced due to an influence of the gravity. Thus, when the first measuring part 311 is disposed on the opposite side of the gravity direction, the degree to which the mixture 110 is dispersed may increase, and thus, since the first sensor device 500 recognizes the mixture 110 through the first measuring part 311, the dispersed mixture 110 may be recognized to more accurately acquire the information about the mixture 110. Furthermore, as mentioned above, the kneading case 310 may have a cylindrical outer appearance, and the first measuring part 311 may form a portion of the cylindrical outer appearance. Unlike as illustrated in FIG. 6, when the first measuring part 311 is disposed at a lower side of the cylindrical outer appearance, the portion at which the first measuring part 311 is disposed may not be the outermost side with respect to the left-right direction, and thus, a shadow generated by the portion of the kneading case 310 that is disposed at the outermost side with respect to the left-right direction may be cast on the first measuring part 311. When the shadow is cast on the first measuring part 311, the first sensor device 500 may acquire optical information of the mixture 110 including the cast shadow, and thus, more inaccurate information of the mixture 110 may be acquired.

Here, the kneading case 310 may extend in one direction. The cam 320 may be provided in plurality so that the mixture 110 moves in the extension direction of the kneading case 310 and thus may be arranged in the extension direction of the kneading case 310. The first measuring part 311 may be provided in plurality and arranged in a length direction of the kneading case 310. The plurality of first sensor devices 500 may be provided to correspond to the plurality of first measuring parts 311, respectively. Thus, the plurality of first sensor devices 500 may acquire information at a plurality of points inside the kneading device 300 and thus may collect information on the mixture 110 acquired at the plurality of points to acquire accurate information on the mixture 110. Furthermore, when the kneading device 300 is the continuous type kneading device 300, as mentioned above, information on different parts with respect to the moving direction of the mixture 110 may be acquired to determine information on the kneading speed according to the moving direction of the mixture 110.

The cam 320 may be provided as a pair at each left/right side. The kneading case 310 may be configured to have a pair of kneading gaps 321g corresponding to the pair of cams 320. As the pair of gaps are provided, the kneading of the mixture 110 may be accomplished more quickly than when a single cam 320 is provided. The first measuring part 311 may be disposed at at least one of a portion of the pair of kneading cases 310 corresponding to the pair of kneading gaps 321g.

The kneading case 310 may accommodate the pair of cams 320, and spaces in which the pair of cams 320 are disposed may be configured to communicate with each other. The mixture 110 may move through each space in which each of the pair of cams 320 is disposed, and thus, the mixture 110 may be mixed to be kneaded more evenly. Alternatively, the mixture 110 may be distributed more evenly. The more uniformly the mixture 110 is distributed, the closer the information about the mixture 110 measured by the first sensor device 500 to information about the entire mixture 110.

Here, the first sensor device 500 may be defined as a colorimeter. The kneading system 1 may further include a first controller 900 configured to determine the crystallinity of the binder 112 based on a value L of the mixture 110 measured by the colorimeter. This is described in more detail in the description below with reference to FIG. 12, which explains how the first sensor device 500 determines the degree of the kneading of the mixture 110.

Hereinafter, embodiments different from the first embodiment are described. It will be omitted as much of the common contents as possible with the first embodiment and will describe other embodiments focusing on the differences. That is, it is obvious that if the contents that are not described in other embodiments are required, it may be supplemented through the contents of the first embodiment.

Second Embodiment

FIG. 7 is a cross-sectional view of a kneading device 300 according to a second embodiment of the present invention.

Referring to FIG. 7, a first measuring part 311-1 according to the second embodiment of the present invention or a configuration related to the first measuring part 311-1 is described.

The second embodiment differs from the first embodiment in that the first measuring part 311-1 is defined as a hole, and a shutter 312-1 configured to cover the first measuring part 311-1 defined as the hole are provided.

The first measuring part 311-1 may be defined as the hole. The kneading device 300 may include the shutter 312-1 configured to cover the first measuring part 311-1. The shutter 312-1 may be provided with a hinge at one side and configured to rotate around the hinge. The shutter 312-1 may extend beyond the first measuring part 311-1. Thus, it may be provided to cover the entire first measuring part 311-1. The shutter 312-1 may rotate away from the first measuring part 311-1 to open the first measuring part 311-1 when attempting to measure a mixture 110 by a first sensor device 500. The shutter 312-1 may cover the first measuring part 311-1 to prevent the mixture 110 from being discharged through the first measuring part 311-1 when the first sensor device 500 does not measure the first measuring part 311-1.

Through the first measuring part 311-1 defined as the hole, the mixture 110 may be taken out to the outside of the kneading device 300. Here, if the first sensor device 500 is configured to directly input the mixture 110, such as a differential calorimeter, the extracted mixture 110 may be input into the first sensor device 500 to acquire information about the mixture 110.

Third Embodiment

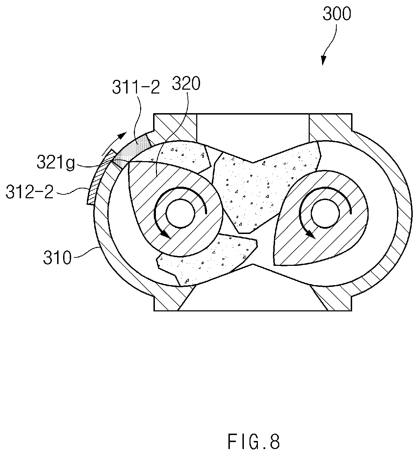

FIG. 8 is a cross-sectional view of a kneading device 300 according to a third embodiment of the present invention.

Referring to FIG. 8, a first measuring part 311-2 according to the third embodiment of the present invention or a configuration related to the first measuring part 311-2 is described.

The third embodiment differs from the first embodiment in that the first measuring part 311-2 is defined as a hole, and a shutter 312-2 configured to cover the first measuring part 311-2 defined as the hole are provided. Particularly, the third embodiment has the same function as the shutter 312-2 described in the second embodiment, but operates in a different manner.

The shutter 312-2 may be configured to cover the first measuring part 311-2 by sliding. The shutter 312-2 may adjust a degree to which the shutter 312-2 exposes the first measuring part 311-2 according to the sliding degree of the shutter 312-2.

Additionally, each of the first measuring part 311-1 and 311-2 according to the second and third embodiments may be defined as the hole, but may have a transparent or translucent configuration like the first embodiment. In this case, the mixture 110 may be prevented from being discharged through the first measuring part 311-1 and 311-2. The reason why the shutter 312-1 and 312-2 covers the first measuring part 311-1 and 311-2 may prevent light from moving into the kneading device 300 through the first measuring part 311-1 and 311-2 and changing properties of the mixture 110.

Fourth Embodiment

FIG. 9 is a cross-sectional view of a kneading device 300 according to a fourth embodiment of the present invention.

Referring to FIG. 9, a first measuring part 311-3 according to the fourth embodiment of the present invention will be described.

The fourth embodiment differs from the first embodiment in that the first measuring part 311-3 is defined as a hole. In particular, the fourth embodiment differs from the second and third embodiments in that the kneading device 300 does not include shutters 312-1 and 312-2.

The first measuring part 311-3 may be defined as the hole. The first measuring part 311-3, which is defined as the hole, may allow a configuration such as a milling jet to affect the inside of the kneading device 300.

Fifth Embodiment

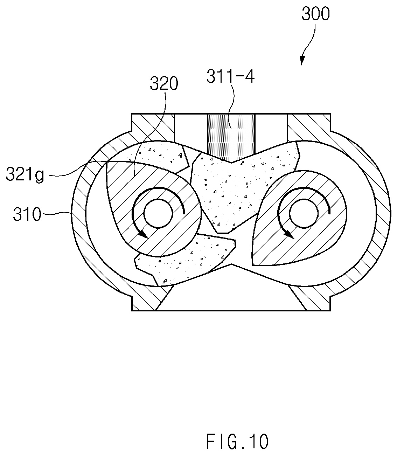

FIG. 10 is a cross-sectional view of a kneading device 300 according to a fifth embodiment of the present invention.

Referring to FIG. 10, a first measuring part 312-4 according to the fifth embodiment of the present invention is described.

The fifth embodiment differs from the first embodiment in that the first measuring part 312-4 does not directly view a kneading gap 321g.

The first measuring part 312-4 may extend vertically in a vertical direction. Particularly, in a kneading device 300 provided with a pair of cams 320, the first measuring part 312-4 may be disposed to overlap a virtual line disposed between the pair of cams 320.

Particularly, a kneading gap 321g may be provided between an inner wall of a kneading case 310 and the cam 320 disposed at both left and right sides based on FIG. 10. Since the first measuring part 312-4 is provided to measure a mixture 110 even if it does not necessarily face the kneading gap 321g, the position of the first measuring part 312-4 may be free.

Sixth Embodiment

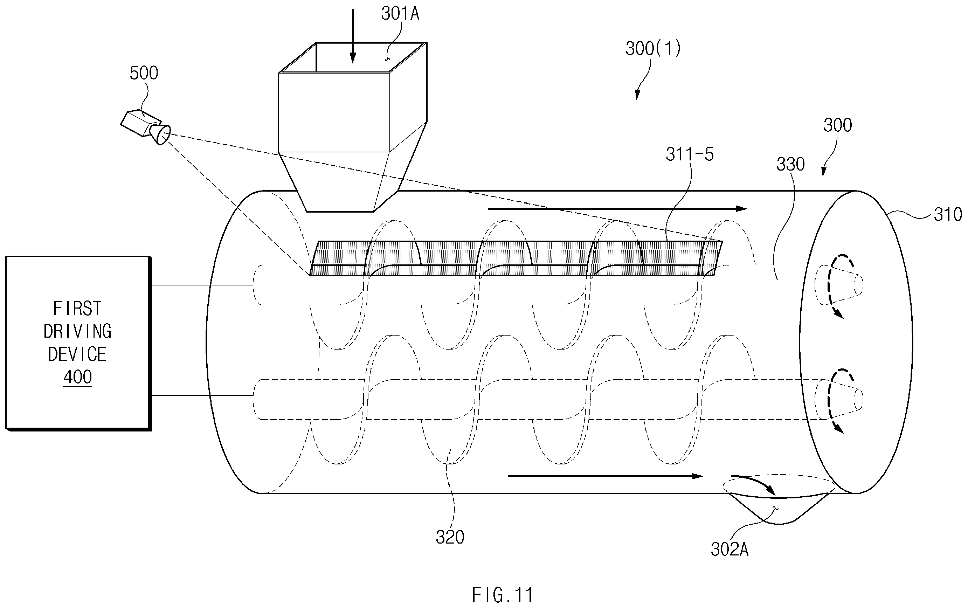

FIG. 11 is a cross-sectional view of a kneading device 300 according to a sixth embodiment of the present invention.

Referring to FIG. 11, a first measuring part 311-5 according to the sixth embodiment of the present invention is described.

The sixth embodiment differs from the first embodiment in that the first measuring part 311-5 is provided singly and extends singly in a longitudinal direction of a kneading case 310.

As in the first embodiment, when the first measuring part 311 is provided in plurality which are arranged along one direction, a portion of the kneading case 310 between the first measuring parts 311 may be provided to prevent the inside of the kneading device 300 from being observed from the outside. In this case, if the first sensor device 500 does not exactly face the first measuring part 311, it is possible to acquire information on the kneading case 310 rather than a mixture 110 by observing a portion of the kneading case 310.

The first measuring part 311-5 of the sixth embodiment is not provided in plurality to prevent a portion of the kneading case 310 from being disposed between the first measuring parts 311-5, thereby preventing a first sensor device 500 from observing a portion of the kneading case 310 other than the first measuring part 311-5.

Here, as illustrated in FIG. 11, the first sensor device 500 may be provided singly. The first sensor device 500 may be configured to rotate in order to acquire information about a mixture 110 at a plurality of points of the kneading device 300. Alternatively, the first sensor device 500 may be provided in plurality, and each first sensor device 500 may acquire information on the mixture 110 at the plurality of points.

Hereinafter, the first embodiment and other embodiments are described. It will be omitted as much of the common contents as possible with the first embodiment and will describe other embodiments focusing on the differences. That is, it is obvious that if the contents that are not described in other embodiments are required, it may be supplemented through the contents of the first embodiment. In more detail, the first to sixth embodiments described the configuration of the kneading device 300. Hereinafter, a method for controlling a kneading system 1 is described.

Seventh Embodiment

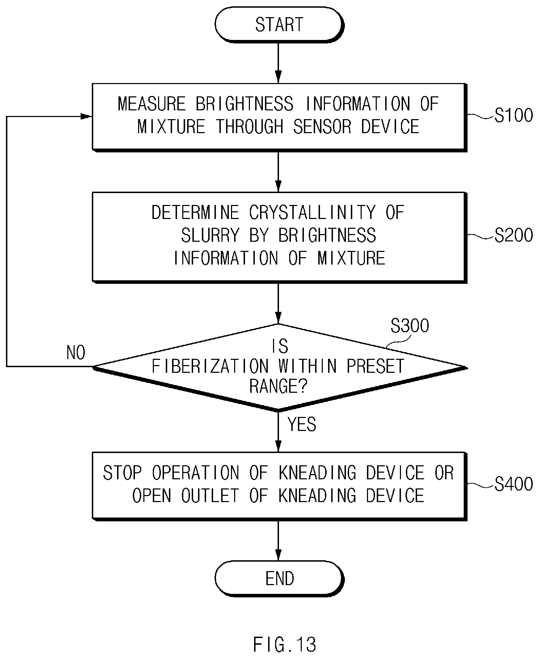

FIG. 12 is a control block diagram of the kneading system 1 according to a seventh embodiment of the present invention. FIG. 13 is a flowchart illustrating a method for controlling the kneading system 1 according to the seventh embodiment of the present invention.

Referring to FIGS. 12 and 13, a method for controlling the kneading system 1 according to the seventh embodiment of the present invention is described.

As illustrated in FIG. 12, the kneading system 1 may include a first controller 900. The first controller 900 may be a configuration that commands for controlling other configurations. More specifically, the first controller 900 may be configured to control a first driving device 400 based on information acquired from a first sensor device 500.

The first controller 900 may include a first memory 920. The first memory 920 may include a volatile first memory 920, such as a static random access memory (S-RAM) or a dynamic random access memory (D-RAM), for temporarily storing data. In addition, the first memory 920 may include a nonvolatile first memory 920 such as a read only memory (ROM), an erasable programmable read only memory (EPROM), or an electrically erasable programmable read only memory (EEPROM) for storing data for a long period of time.

The first controller 900 may include a first processor 910. The first processor 910 may generate a control signal for controlling an operation of the first driving device 400, a shaft and/or a cam 320 based on instructions, applications, data and/or programs stored in the first memory 920. The first processor 910 may be provided as hardware and include a logic circuit and an operation circuit. The first processor 910 may process data according to the program and/or instruction provided from the first memory 920 and generate a control signal according to the processing result. The first memory 920 and the first processor 910 may be implemented as one control circuit or a plurality of circuits. For example, the first processor 910 may be implemented as a central processing unit (CPU), an application processor (AP), or a microprocessor 910.

The program above may include program(s) implemented in the form of at least one of a BIOS, a device driver, an operating system, a firmware, a platform, or an application program. As an example, the application program may be installed or stored in advance in the kneading device 300 or the kneading system 1 during the manufacturing of the kneading device 300 or the kneading system 1, or may be installed in the kneading device 300 or the kneading system 1 based on the received data by receiving data of the application program from an external source during subsequent use. The application data may also be downloaded from an external server, such as an application market (application store), to the kneading device 300 or the kneading system 1. Such an external server is an example of, but not limited to, computer program products of the present invention.

The first controller 900 may perform control as in the flowchart illustrated in FIG. 13. Hereinafter, before explaining the method for controlling the kneading system 1, the first sensor device 500 is configured to detect brightness information of the mixture 110. In this case, the first controller 900 may be configured to determine crystallinity of a binder 112 based on the brightness information of the mixture 110 detected by the first sensor device 500.

In other words, the kneading device 300 may be controlled to determine the crystallinity of the binder 112 and to ensure that the mixture 110 includes the binder 112 having a desired crystallinity through the determined crystallinity of the binder 112. As illustrated in FIG. 13, the first sensor device 500 may measure brightness information of the mixture 110. In the first embodiment, the first sensor device 500 is capable of sensing the information about the mixture 110 by directly acquiring the mixture 110 and analyzing the mixture 110. In the seventh embodiment, a method of acquiring the information on the mixture 110 by acquiring optical information of the mixture 110 using the first sensor device 500 is described.

The first sensor device 500 may measure the brightness information of the mixture (S100, first detection process). The first controller 900 may determine crystallinity of the binder 112 based on the brightness information of the mixture 110 transmitted from the first sensor device 500 (S200, first determination process). Here, the first controller 900 may determine whether the determined crystallinity of the binder 112 is within a preset range (S300), and if it is within the preset range of the crystallinity of the binder 112 (S300), the kneading device 300 may be controlled to stop an operation or open an outlet 302A of the kneading device 300 (S400).

More specifically, the binder 112 may have a brighter color than an active material 111. In extreme cases, the active material 111 may have a black color, and the binder 112 may have a white color. However, since the color of the binder 112 in the determined state is darker than a color after fiberization, the bright color may decrease when the binder 112 is fiberized. Thus, as the fiberization of the binder 112 progresses, the color of the entire mixture 110 may darken. Thus, the fiberization or crystallinity of the binder 112 may be determined by the brightness of the color of the entire mixture 110.

As mentioned above, since the crystallinity of the binder 112 affects physical strength characteristics of the electrode 100 manufactured by the mixture 110, it is desirable that the crystallinity of the binder 112 is within a predetermined range in order to obtain an electrode 100 having strength sufficient to resist an external impact.

Here, the first sensor device 500 may specifically include a colorimeter. In addition, the brightness information of the mixture 110 may be defined as a value L of the colorimeter. The colorimeter may measure values a and b in addition to the value L. Here, the values a and b may represent color information, and the value L may represent information about the brightness of the color. Since colors of the binder 112, the active material 111, and the conductive material 113 vary depending on materials to be used, the color may not have a direct correlation with the crystallinity of the binder 112. Furthermore, if the binder 112 is white, and the active material 111 is black, there is practically nothing to be displayed as colors, and thus, brightness may be a factor directly related to the fiberization of the binder 112. Here, since a high value L means that the brightness of the mixture 110 is bright, when the value L is high, it may mean that the fiberization of the binder 112 is low, and the degree of the crystallinity of the binder 112 is high. Here, if the value L is low, since it means that the brightness of the mixture 110 is dark, when the value L is low, it may mean that the fiberization of the binder 112 is high, and the degree of the crystallinity of the binder 112 is low.

Specifically, in order to determine a relationship between the value L of the colorimeter and the fiberization of the binder 112, experiments were conducted, and data described in table below were acquired. (Hereinafter, referred to as a first experiment)

[Table 1]

| Sample Number | Crystallinity (%) | Value L |
|---|---|---|
| #1 | 27.62 | 25.28 |
| #2 | 18.14 | 28.17 |
| #3 | 17.54 | 28.22 |
| #4 | 12.99 | 29.46 |

Furthermore, in order to determine an effect of crystallinity on an elongation at break of the mixture 110, experiments were conducted, and data described in table below were acquired.

[Table 2]

| Sample Number | Crystallinity (%) | Elongation at break |
|---|---|---|
| #1 | 0.5 | 1.5 |
| #2 | 5 | 1.6 |
| #3 | 11 | 1.9 |
| #4 | 17 | 2.76 |
| #5 | 20 | 2.5 |

(continued)

| Sample Number | Crystallinity (%) | Elongation at break |
|---|---|---|
| #6 | 35 | 1.7 |

First, environmental information for a first experiment and a second experiment is as follows. The experiments were conducted at room temperature and a pressure in a dry room.

A material used in the experiments was lithium iron phosphate (LFP) as the active material 111. Poly tetra fluoro ethylene (PTFE) was used as the binder 112. Carbon black was used as the conductive material 113.

A degree of crystallinity presented as results of the experiments was measured using a differential calorimeter.

In Table 2, which shows results of the second experiment, an elongation at break was measured to be the highest when the crystallinity is 17% (sample #3). A value of the elongation at break is a ratio between an increasing length and an initial length after breakage of a specimen tested at a controlled temperature. Since the elongation at break represents ability of a sample to resist deformation without cracking, a crystallinity of 17% is considered to have the best ability to resist the deformation without the cracking. In other words, mechanical strength may be seen to be best when the crystallinity is 17%. The crystallinity value may be interpreted as being able to achieve the desired mechanical strength when the value is in the range of 15% to 20% in consideration of measurement errors.

Here, in Table 1, which shows results of the first experiment, if the crystallinity is approximately 16% or more and 18% or less, the value L of the mixture 110 may be estimated to be approximately 28 or more and 28.7 or less through the results of samples #2 and #3. Thus, the first controller 900 may determine that the crystallinity of the binder 112 is 16% or more and less than 18% based on the value L being 28 or more and 28.7 or less.

Using the experimental data above, when generating a first-order approximation, the following approximation may be acquired. The crystallinity of the binder 112 is defined as X, and the first controller 900 may be configured to determine the crystallinity of the binder 112 by following [Equation 2].

$$[Equation\ 2]$$
$$X = -3.47L + 115.4$$

Here, when considering the measurement error, the first controller 900 may be configured to determine the crystallinity of the binder 112 by following [Equation 1].

$$[Equation\ 1]$$
$$(X) = -A*(L) + B$$
$$3.4 < A < 3.5,\ 110 < B < 120$$

In the case of [Equation 1], it may be seen that it is a substantially different embodiment from [Equation 2]. [Equation 1] may determine coefficients of the equations by determining values A and B within a predetermined range, and thus, the crystallinity of the binder 112 may be determined. The appropriate values A and B may be determined by setting appropriate values by a person skilled in the art.

When generating a second-order approximation through the experimental data, the following approximation may be acquired.

$$[Equation\ 3]$$
$$DSC = -0.1162L^2 + 2.8603L + 29.587$$

As described above, a method for approximating the experimental data with first- or second-order polynomial function was presented. However, without being limited thereto, the approximation may be an nth-degree polynomial function, and furthermore, it may be approximated by an approximation that is not a polynomial function, such as an exponential function.

When understood together with the configuration of the aforementioned kneading device 300, the kneading system 1 may be explained as follows.

The kneading device 300 may include a kneading case 310 configured to accommodate the mixture 110, a kneading cam 320 configured to rotate inside the kneading case 310 and to press the mixture 110 between the kneading cam 320 and the kneading case 310, and/or a first driving device 400 configured to apply driving force to the kneading cam 320 to rotate the kneading cam 320. The first controller 900 may be configured to control the first driving device 400 based on the determined crystallinity of the binder 112.

The first controller 900 may be configured to control the kneading device 300 to stop the kneading based on the determined crystallinity of the binder 112 being within a preset range.

Alternatively, the first controller 900 may be configured to control the kneading device 300 to discharge the mixture 110 from the kneading device 300 based on the crystallinity of the binder 112 being within the preset range.

Here, the preset crystallinity of the binder 112 may be 10% to 20%. Preferably, the preset crystallinity of the binder 112 may be 17% to 18%.

Furthermore, the first controller 900 may be configured to control the kneading device 300 to proceed with the kneading of the mixture 110 based on the crystallinity exceeding 20%.

The mixture 110 used in the above-described kneading system 1 may be suitable for applying the idea of the present invention if it is the dry type that does not contain a solvent.

Hereinafter, embodiments different from the seventh embodiment are described. Contents in common with the seventh embodiment will be omitted as much as possible, and another embodiment will be described focusing on differences. That is, it is obvious that if the contents that are not described in other embodiments are required, it may be supplemented through the contents of the first embodiment.

Eighth Embodiment

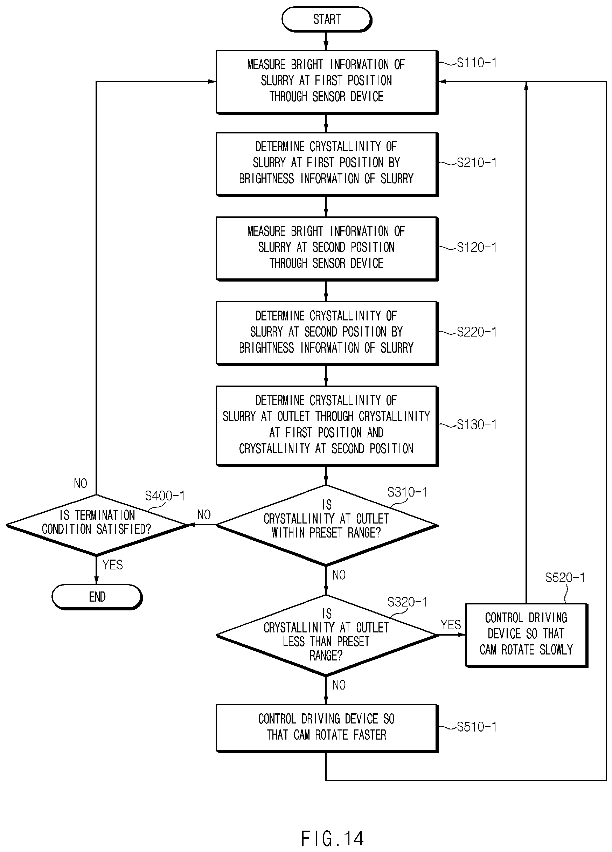

FIG. 14 is a flowchart illustrating a method for controlling a kneading system according to an eighth embodiment of the present invention.

Referring to FIG. 14, a method for controlling a kneading system 1 according to the eighth embodiment of the present invention will be described.

The eighth embodiment differs from the seventh embodiment in that a speed of the cam 320 is controlled based on information about crystallinity of a binder 112. Particularly, descriptions of the eighth embodiment of the present invention described below may be suitably applied to the case of the continuous type kneading device 300.

As illustrated in FIG. 14, a first controller 900 may measure brightness information of the mixture 110 at a first position through a first sensor device 500 (S110-1) and may determine a degree of crystallization of the binder 112 based on the brightness information of the mixture 110 at the first position (S210-1). The first controller 900 may measure brightness information of the mixture 110 at a second position different from the first position through the first sensor device 500 (S120-1) and may determine a degree of crystallization of the binder 112 based on the brightness information of the mixture 110 at the second position (S220-1). The first controller 900 may determine the crystallinity of the mixture 110 at an outlet 302A based on the crystallinity of the binder 112 at the first position and the crystallinity of the binder 112 at the second position (S130-1). For example, as mentioned above, as illustrated in FIG. 5, when the mixture 110 moves from a left side to a right side, and the first position is disposed relatively to the left side of the second position, the first controller 900 may determine a change in crystallinity according to a change in position of the binder 112 based on the crystallinity of the binder 112 at the first position and the crystallinity of the binder 112 at the second position. Thus, the crystallinity of the binder 112 of the mixture 110 discharged to the outlet 302A may be determined.

Here, if the first controller 900 determines that the crystallinity of the mixture 110 in the outlet 302A is within the previously set range, and thus the mixture 110 is determined to have a desired range of elongation at break, a speed of the cam 320 may be maintained without being changed (S310-1). In this case, the mixture 110 having the crystallinity within the preset range may be continuously discharged to the outlet 302A of the kneading device 300. The first controller 900 may terminate the kneading of the kneading device 300 according to a signal to turn off power of the kneading device 300 or other preset termination conditions.

If it is determined that the crystallinity of the mixture 110 at the outlet 302A is out of the preset range mentioned above (S320-1), the first controller 900 may control the speed of the cam 320 so that the mixture 110 at the outlet 302A of the kneading device 300 is within the preset range. Since the speed of the cam 320 is determined by the driving force of the first driving device 400, the first controller 900 may control the first driving device 400 to adjust the speed of the cam 320. More specifically, the first controller 900 may control the first driving device 400 to rotate the cam 320 faster based on the crystallinity of the binder 112 at the outlet 302A being greater than the preset range (S510-1). The first controller 900 may control the first driving device 400 to rotate the cam 320 more slowly based on the crystallinity of the binder 112 at the outlet 302A being less than the preset range (S520-1).

Ninth Embodiment

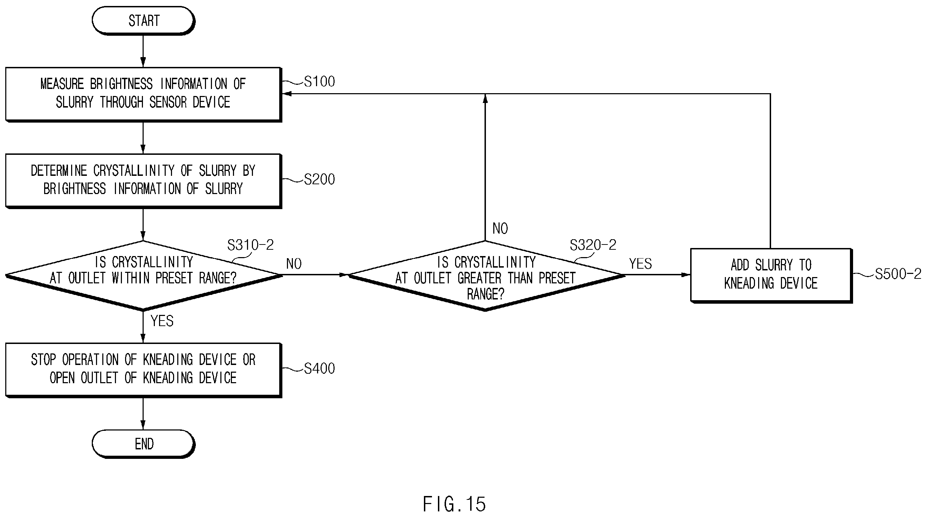

FIG. 15 is a flowchart illustrating a method for controlling a kneading system 1 according to a ninth embodiment of the present invention.

Referring to FIG. 15, a method for controlling the kneading system 1 according to the ninth embodiment of the present invention will be described.

The ninth embodiment differs from the seventh embodiment in that a first controller 900 may perform an operation of adding a mixture 110 to a kneading device 300.

If the crystallinity of the binder 112 is lower than the preset range (S320-2), an additional mixture 110 may be added to the kneading device 300 (S500-2).

The first controller 900 may be configured to control the kneading device 300 to add the mixture 110 to the kneading device 300 based on the determined degree of the crystallinity being greater than 20%. The kneading device 300 may include a configuration that opens or closes an inlet 301A to add the mixture 110 to the kneading device 300. When the inlet 301A of the kneading device 300 is opened, the mixture 110 may be introduced into the kneading device 300.

When the crystallinity of the binder 112 is less than the preset range (S320-2), the kneading of the mixture 110 may proceed without the additional input of the mixture 110 into the kneading device 300. The mixture 110 may be kneaded until the crystallinity of the binder 112 is within the desired range.

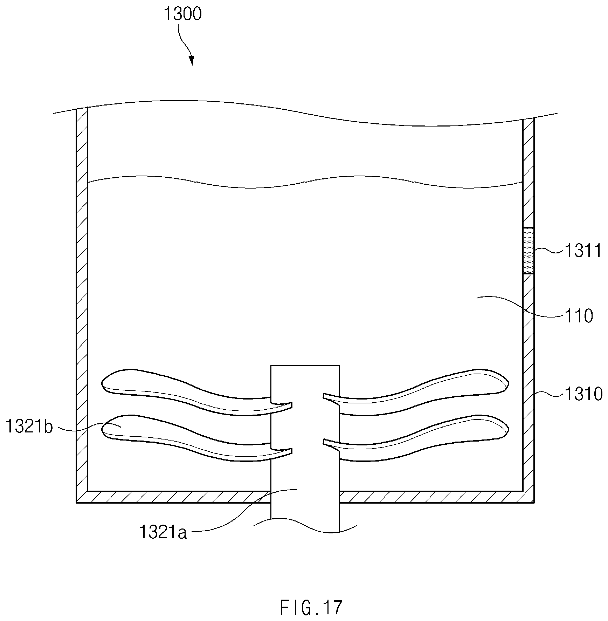

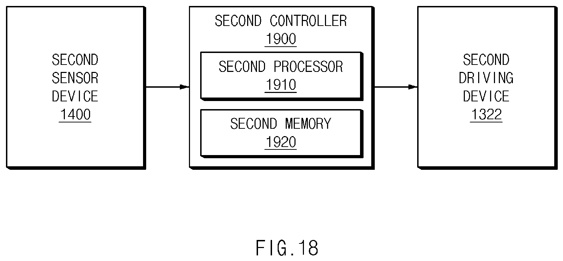

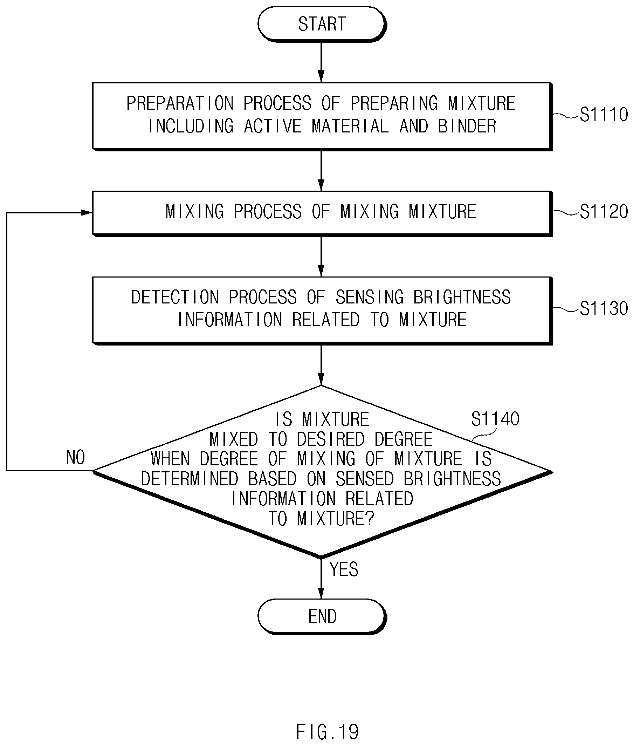

FIG. 16 is a perspective view illustrating a pre-mixing device 1300 configured to mix the mixture 110 illustrated in FIG. 4. FIG. 17 is a cross-sectional view of the pre-mixing device 1300 illustrated in FIG. 16. FIG. 18 is a control block diagram of a pre-mixing system 2 according to a tenth embodiment of the present invention. FIG. 19 is a flowchart illustrating a method for manufacturing an electrode 100 according to the tenth embodiment of the present invention.

With reference to FIGS. 16 to 19, the tenth embodiment of the present invention will be described.

The mixing system of the present invention may include a pre-mixing system 2 and a kneading system 1. For mixing of a mixture 110, the pre-mixing system 2 may be provided. In addition, as illustrated in FIG. 16, the pre-mixing device 1300 configured to accommodate and mix the mixture 110 including an active material 111 and a binder 112 therein may be provided. The pre-mixing system 2 may include the pre-mixing device 1300. The mixture 110 may be introduced into the pre-mixing device 1300 through an inlet 1301A of the pre-mixing device 1300. The mixture 110 introduced into the pre-mixing device 1300 may move and be mixed with each other by receiving a mechanical pressure. The mixture 110 that has been mixed may be discharged to the outside of the pre-mixing device 1300 through the outlet 1302A of the pre-mixing device 1300. Here, since there is not only a mechanical method for the mixing, the mixing method to which the present invention is applied is not limited to the mechanical method. Furthermore, as described below, the mixing method to which the present invention is applied is not limited to a method of mixing by pressing the mixture 110 through a separate stirrer 1321, and a method of mixing the mixture 110 by emitting pressed air may also be considered as the mixing method to which the present invention is applied.

Although the mixing of the discharged mixture 110 is measured through the outlet 1302A of the pre-mixing device 1300, there is a problem in that a mixing degree of the discharged mixture 110 is not controlled when measuring the mixing of the mixture 110 through this method. To solve this problem, the pre-mixing system 2 includes a second sensor device 1400 configured to detect the mixture 110, and the second sensor device 1400 may detect the mixture 110 before being discharged to the outlet 302A, thereby enabling control of the degree of the mixing in advance. More specifically, the pre-mixing system 2 may be configured to control the pre-mixing in real time while the mixture 110 is being pre-mixed in the pre-mixing device 1300, and thus, the mixture 110 is properly pre-mixed. In other words, information about the pre-mixing state may be acquired in an on-line state or in-line state of the pre-mixing device 1300.

For this purpose, the pre-mixing system 2 may include the second sensor device 1400 configured to sense the mixture 110. Particularly, the second sensor device 1400 may be configured to sense information related to brightness of the mixture 110. For example, the second sensor device 1400 may include a colorimeter. Here, the second sensor device 1400 may be disposed outside the pre-mixing device 1300. A description of the second sensor device 1400 will be provided later together with a description of the second controller 1900. The pre-mixing device 1300 may include following configurations to enable the second sensor device 1400 to sense the mixture 110 disposed inside the pre-mixing device 1300.

The pre-mixing device 1300 may include a mixing case 1310 configured to accommodate the mixture 110. The mixing case 1310 may be formed in a substantially cylindrical shape, as illustrated in FIG. 16.

The mixing case 1310 may include a second measuring part 1311 configured to detect the inside of the second sensor device 1400. A portion of the remaining mixing case 1310 excluding the second measuring part 1311 may be opaque. Thus, it may be difficult for the second sensor device 1400 to sense the mixture 110 disposed inside the pre-mixing device 1300 through the remaining mixing case 1310 except for the second measuring part 1311. Particularly, when the second sensor device 1400 is to acquire optical information, it may be difficult to sense the mixture 110 through an opaque material.

The second measuring part 1311 may be transparent or translucent. The second sensor device 1400 may sense the inside of the pre-mixing device 1300 through the transparent or translucent second measuring part 1311. Here, the transparent or translucent means that light passes therethrough. Thus, the transparent or translucent second measuring part 1311 may mean that it is transparent or translucent if the first measuring part 311 has not only a characteristic that allows visible light to pass therethrough, but also a characteristic that allows infrared rays, ultraviolet rays, or light having other wavelengths to pass therethrough. However, for convenience of explanation, the second sensor device 1400 may recognize light in a visible light range, and the second measuring part 1311 may also recognize light that passes through visible light.

However, as another embodiment, the second measuring part 1311 may be defined as a hole. When the second measuring part 1311 is the hole, the mixture 110 inside the mixing case 310 may be scattered to the outside of the mixing case 310 by mixing. Thus, to prevent this problem, a shutter may be provided to open or close the hole.

The second sensor device 1400 may be adjacent to the second measuring part 1311. As illustrated in FIG. 16, the second sensor device 1400 may be disposed so as not to be in contact with the second measuring part 1311, but when considering that the closer the second sensor device 1400 is disposed to the second measuring part 1311, the higher a resolution of the mixture 110 that is recognized through the second measuring part 1311, the second sensor device 1400 may be disposed to be in contact with the second measuring part 1311, thereby increasing in resolution of the information about the mixture 110 acquired by the second sensor device 1400. Furthermore, since the mixture 110 does not move outside the kneading device through the second measuring part 1311, even if the second sensor device 1400 is in contact with the second measuring part 1311 or is disposed close to the second sensor device 1400 and the second measuring part 1311, the mixture 110 may be prevented from splashing onto the second sensor device 1400 through the second measuring part 1311. Thus, even if the second sensor device 1400 is placed adjacent to the second measuring part 1311, a problem of contamination of the second sensor device 1400 may be prevented from occurring.

Here, the second measuring part 1311 may be disposed below a height of the mixture 110. More specifically, when the mixture 110 is accommodated in the mixing case 1310, the second measuring part 1311 may be disposed below an expected height of the mixture 110 or a preset height of the mixture 110. Since the second sensor device 1400 measures the mixture 110 through the second measuring part 1311, the position of the second measuring part 1311 may be, that is, a position of the mixture 110, which is measured by the second sensor device 1400. For example, based on FIG. 16, when sensing the mixture 110 from top to bottom, a large amount of mixture 110 may move, and a surface of the mixture 110 that is being measured may not be flat. Furthermore, a density of the mixture 110 on the surface of the mixture 110 to be measured may not be constant. In contrast, when observing the mixture 110 from the inside of the mixture 110, the mixture 110 may be disposed both above and below the mixture 110 disposed at the observed portion, and thus, the movement of the mixture 110 may be relatively small, and the density of the mixture 110 may be relatively constant because of being pressed. Furthermore, since the mixture 110 is pressed toward the second measuring part 1311, the mixture 110 near the second measuring part 1311 may have a flat surface. Particularly, the mixture 110 that is in contact with the second measuring part 1311 may have an even flatter surface. In other words, the second measuring part 1311 may be configured to be provided at a position at which the mixture 110 is in contact with the second measuring part 1311.

The pre-mixing device 1300 may include a mixer 1320 configured to mix the mixture 110. The mixer 1320 may have various shapes as mentioned above.

For example, the mixer 1320 may include a stirrer 1321 configured to mix the mixture 110 inside the mixing case 1310, as illustrated in FIG. 6. The stirrer 1321 may be coupled to the pre-mixing device 1300 so as to be rotatable. The stirrer 1321 may include a stirrer shaft 1321a extending along a longitudinal direction of the mixing case 1310 and a stirrer wing 1321b extending from the stirrer shaft 1321a in a direction different from the longitudinal direction of the stirrer shaft 1321a. The stirrer 1321 may rotate by using the longitudinal direction of the stirrer shaft 1321a as a rotation axis.

As illustrated in FIG. 16, the mixer 1320 may include a second driving device 1322 configured to generate driving force so as to rotate the stirrer 1321. The second driving device 1322 may be connected to the stirrer 1321. The second driving device 1322 may be, for example, a motor, an actuator, a hydraulic device, etc.

As illustrated in FIG. 18, the pre-mixing system 2 may include a second controller 1900. The second controller 1900 may be a configuration that commands for controlling other configurations. For example, the second controller 1900 may be configured to control the second driving device 1322 based on information acquired from the second sensor device 1400. The second controller 1900 may control an operation or stop of the second driving device 1322. Furthermore, the second controller 1900 may also control a rotation speed of the stirrer 1321 by controlling an output of the second driving device 1322. Although the second controller 1900 is illustrated as controlling the second driving device 1322 in an embodiment of the present invention in FIG. 18, the second controller 1900 may also control operations such as the control of the opening or closing of the inlet 1301A or outlet 1302A of the pre-mixing device 1300.

In an embodiment, the first controller 900 of the kneading system 1 and the second controller 1900 of the pre-mixing system 2 may be integrated to be managed and controlled by an upper-level controller of the mixing system.

The second controller 1900 may include a second memory 1920. The second memory 1920 may include a volatile second memory 1920, such as a static random access memory (S-RAM) or a dynamic random access memory (D-RAM), for temporarily storing data. In addition, the second memory 1920 may include a nonvolatile second memory 1920 such as a read only memory (ROM), an erasable programmable read only memory (EPROM), or an electrically erasable programmable read only memory (EEPROM) for storing data for a long period of time.

The second controller 1900 may include a second processor 1910. The second processor 1910 may generate a control signal for controlling an operation of the second driving device 1322, a shaft and/or a cam based on instructions, applications, data and/or programs stored in the second memory 1920. The second processor 1910 may be provided as hardware and include a logic circuit and an operation circuit. The second processor 1910 may process data according to the program and/or instruction provided from the second memory 1920 and generate a control signal according to the processing result. The second memory 1920 and the second processor 1910 may be implemented as one control circuit or a plurality of circuits. For example, the second processor 1910 may be implemented as a central processing unit (CPU), an application processor (AP), or a microprocessor 910.

The program above may include program(s) implemented in the form of at least one of a BIOS, a device driver, an operating system, a firmware, a platform, or an application program. As an example, the application program may be installed or stored in advance in the kneading device or the kneading system during the manufacturing of the kneading device or the kneading system, or may be installed in the kneading device or the kneading system based on the received data by receiving data of the application program from an external source during subsequent use. The application data may also be downloaded from an external server, such as an application market (application store), to the kneading device or the kneading system. Such an external server is an example of, but not limited to, computer program products of the present invention.

The second controller 1900 may perform control in an order illustrated in FIG. 19. As illustrated in FIG. 19, a preparation process (S1110), in which the mixture 110 including the active material 111 and the binder 112 is prepared, may be performed. Here, the binder 112 may have a color brighter than that of the active material 111. After the preparation process (S1110), a mixing process (S1120) of mixing the mixture 110 may be performed. The mixing process (S1120) may be performed by a mixer 1320 included in the pre-mixing device 1300 mentioned above. While the mixing process (S1120) is being performed, a detection process (S1130, second detection process) of sensing brightness information about the mixture 110 may be performed. Although the detection process (S1130) is performed after the mixing process (S1120) in FIG. 19, the detection process may be performed before the mixing process (S1120) or even during the mixing. The detection process may be performed by the second sensor device 1400 mentioned above. More specifically, the second sensor device 1400 may be configured to acquire information related to the brightness of the mixture 110. The second controller 1900 may measure the brightness of the mixture 110 based on the information about the brightness of the mixture 110 acquired from the second sensor device 1400. After the detection process (S1130), a determination process (S1140, second determination process) of determining a degree of the mixing of the mixture 110 may be performed based on the brightness information about the sensed mixture 110. That is, the second controller 1900 may be configured to determine the degree to which the mixture 110 is mixed based on the brightness information of the mixture 110 obtained by the second sensor device 1400.

In other words, in the mixture 110, the active material 111 may be relatively dark, and the binder 112 may be relatively bright. If evenly mixed, the brightness of the mixture 110 may be disposed somewhere between the brightness of the active material 111 and the binder 112, and thus, the degree of the mixing of the mixture 110 may be determined based on the brightness of the mixture 110 having a predetermined value. More specifically, it may determine the completion of the mixing. If a brightness brighter than the brightness of the mixture 110 that serves as the standard for the completion of the mixing is measured in the mixture 110, the second sensor device 1400 has measured the portion at which the binder 112 is clumped together, and if a brightness not brighter than the brightness of the mixture 110 that serves as the standard for the completion of the mixing is measured in the mixture 110, the second sensor device 1400 has measured the portion at which the active material 111 is clumped together, and thus, it may be determined in both cases that that the mixture 110 is not uniformly mixed.

Here, the second sensor device 1400 may include a colorimeter. Thus, the information about the brightness of the mixture 110 may be defined as a value L of the colorimeter. The colorimeter may measure values a and b in addition to the value L. Here, the values a and b may represent color information, and the value L may represent information about the brightness of the color. Since colors of the binder 112, the active material 111, and the conductive material 113 vary depending on materials to be used, the color may not have a direct correlation with the crystallinity of the binder 112. Furthermore, if the binder 112 is white, and the active material 111 is black, there is practically nothing to be displayed as colors, and thus, brightness may be a factor directly related to the fiberization of the binder 112. Here, a high value L may mean that the brightness of the mixture 110 is bright. Thus, the second controller 1900 may be configured to determine the degree of the mixing of the mixture 110 based on the value L of the mixture 110 obtained by the second sensor device 1400.

The second controller 1900 may be configured to control whether to stop the stirrer 1321 based on whether the brightness of the mixture 110 is within a predetermined range. That is, the second controller 1900 may be configured to control whether to stop the stirrer 1321 based on whether the value L of the mixture 110 is within a predetermined range. If the value L of the mixture 110 is above or below the predetermined range, the stirrer 1321 may not stop and may continue to rotate to mix the mixture 110.

Furthermore, the second controller 1900 may be configured to determine whether to knead the mixture 110 based on the determined degree of the mixing of the mixture 110. Since the mixing includes a process of inducing fiberization of the binder 112 in addition to the mixing to enable the kneading of the mixture 110, if the degree of the mixing has not reached the desired degree, the mixture 110 may be restricted from performing the kneading process (S1120).

Particularly, when the binder 112 is fiberized, crystals of the binder 112 may be broken, and thus, it may be interpreted that bright particles disappear as the binder 112 is fiberized more. Thus, when the binder 112 is fiberized, the overall brightness of the mixture 110 may become relatively dark. As a result, after the mixture becomes uniform, the fiberization of the binder 112 may be identified based on the brightness of the mixture 110, and whether the kneading is possible may be determined based on whether the identified binder 112 is fiberized.

Another example of an appropriate range of the value L presented above is described below.

Hereinafter, embodiments different from the tenth embodiment are described. Contents in common with the tenth embodiment will be omitted as much as possible, and another embodiment will be described focusing on differences. That is, it is obvious that if the contents that are not described in another embodiment are required, it may be supplemented through the contents according to the tenth embodiment.

Eleventh Embodiment

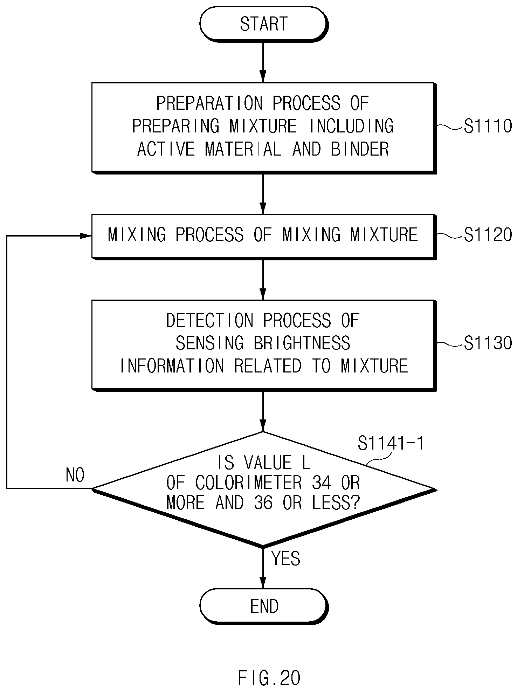

FIG. 20 is a flowchart illustrating a determination process in a method for manufacturing an electrode 100 according to an eleventh embodiment of the present invention.

Referring to FIG. 20, the eleventh embodiment of the present invention will be described.

In the description of the tenth embodiment, it was considered that if the mixture 110 has the value L within the predetermined range, mixing may be determined to be completed. In the eleventh embodiment, an example of the value L of the mixture 110 that serves as a criterion for determining the completion of the mixing is presented.

The following experiment was conducted to obtain an appropriate range of the value L.

The experiment was conducted with the mixture 110 made of 94 g of lithium iron phosphate as a positive electrode active material 111, 1.5 g of carbon black as a conductive material 113, and 4.5 g of PTFE as a binder 112. Hereinafter, the results of the experiment to determine whether the value L of the colorimeter and kneading capability of the mixture 110 depend on a mixing time are shown.

[Table 3]

| | Material | Mixing Time (min) | Value L of Colorimeter | Whether kneading is possible |
|---|---|---|---|---|
| Experimental Example 1 | Mixture (110) | 1 | 44 | X |
| | | | 4 | |
| | | | 46 | |
| Experimental Example 2 | Mixture (110) | 5 | 38 | X |
| | | | 40 | |
| | | | 39 | |
| Experimental Example 3 | Mixture (110) | 10 | 34 | 0 |
| | | | 34 | |
| | | | 35 | |
| Comparative Example 1 | Active material (111) alone | - | 44 | - |
| Comparative Example 2 | Conductive material (113) alone | - | 4 | - |

The experiment was conducted in three processes: Experimental Example 1, which was an initial process of mixing, Experimental Example 2, which was an intermediate process of mixing only, and Experimental Example 3, in which a portion of the binder 112 was fiberized after the mixing. Additionally, the values of the colorimeter of the active material 111 and the conductive material 113, which are not mixed, were also conducted as Comparative Examples 1 and 2, respectively. Since the binder 112 has a white color, the measuring of the value L was meaningless, and thus no separate measurement was performed.

In each experimental example, three measurements were performed.

In Experimental Example 1, the mixture 110 was mixed for 1 minute. The value L of the mixed mixture 110 was measured three times, and then, the measured values was 44, 4, and 46, respectively. The measured value L was not a constant value and was measured in an uneven manner. This may be seen as meaning that the mixing has not yet been properly carried out.

In Experimental Example 2, the mixture 110 was mixed for 5 minutes. The value L of the mixed mixture 110 was measured three times, and then, the measured values was 38, 40, and 39, respectively. The measured values L were relatively constant. As a result, it was possible to determine that some degree of mixing had occurred.

In Experimental Example 3, the mixture 110 was mixed for 10 minutes. The value L of the mixed mixture 110 was measured three times, and then, the measured values was 34, 34, and 35, respectively. The measured value L was more consistent than in Experimental Example 2. Furthermore, a value that are lower overall than the measured value L in Experimental Example 2 was measured. As mentioned above, this may be because crystals of the binder 112 that contributed to the high value L disappear as the binder 112 is partially fiberized.

Through the results obtained from the above experiment, the embodiments of the present invention may be specified as follows.

When a process of mixing the mixture 110 including the active material 111 having a weight ratio of 80% or more and 98% or less, the conductive material 113 having a weight ratio of 0.5% or more and 5% or less, and the binder 112 having a weight ratio of 0.5% or more and 10% or less is provided, the second controller 1900 may be configured to determine the completion of the mixing based on the value L of the mixture 110, which is 30 or more and 40 or less. Preferably, the second controller 1900 may be configured to determine the completion of the mixing based on the value L of the mixture 110 being 34 or more and 36 or less (S1141-1).

Here, the electrode 100 formed thereby may be provided with the value L of the colorimeter of the mixture 110 of 34 or more and 36 or less.

Twelfth Embodiment

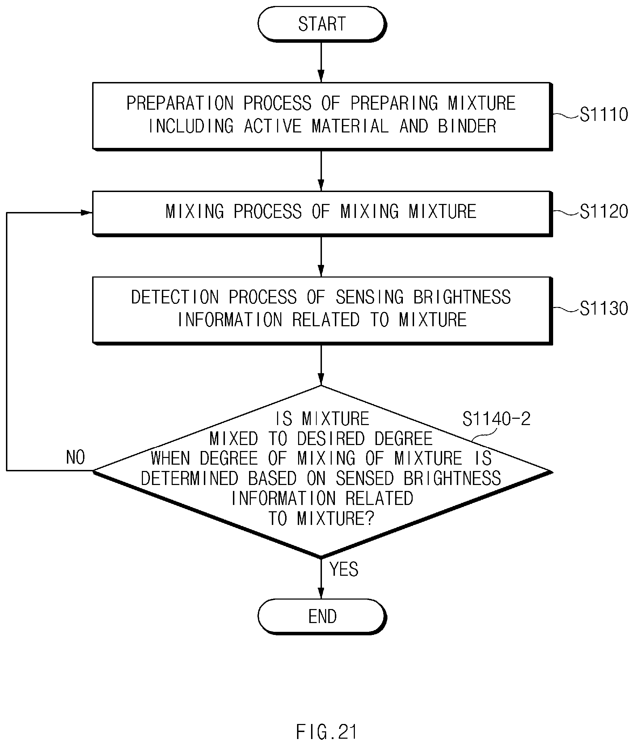

FIG. 21 is a flowchart illustrating a method for manufacturing an electrode 100 according to a twelfth embodiment of the present invention.

Referring to FIG. 21, the twelfth embodiment of the present invention will be described.

As in the experiment presented and described in the eleventh embodiment, the value L of the colorimeter may be measured in a plurality of manners. This is because uniformity of the mixing is the same concept as dispersity in uniformity of a composition of the mixture 110. Thus, checking whether the mixing of the mixture 110 is uniform may be done by measuring the uniformity of each composition in different portions of the mixture 110. In the tenth and eleventh embodiments, a composition of a specific portion was determined through the brightness of the mixture 110 or the value L of the mixture 110. The twelfth embodiment differs from the tenth and eleventh embodiments in that the compositions in different portions of the mixture 110 are measured.

The second controller 1900 may determine the degree to which the mixture 110 is mixed based on the brightness information of the plurality of mixtures 110 (S1140-2). Preferably, the second controller 1900 may be configured to determine the completion of the mixing based on an average of the values L of the plurality of mixtures 110 obtained by the second sensor device 1400, which is 34 or more and 36 or less.

For this, the second controller 1900 may determine the degree of the mixing of the mixture 110 based on the brightness information of the plurality of mixtures 110, which is measured at different times. For example, as illustrated in FIG. 16, the second sensor device 1400 may be fixedly disposed to face the second measuring part 1311. Since the mixture 110 rotates by the stirrer 1321 of the pre-mixing device 1300, as time is elapsed, the second sensor device 1400 may obtain the brightness information at different positions of the mixture 110.

Alternatively, the second controller 1900 may determine the degree of the mixing of the mixture 110 based on the brightness information of the plurality of mixtures 110, which is measured at different positions. In this case, since the plurality of second sensor devices 1400 are provided, or the second sensor device 1400 move, when the second sensor device 1400 is capable of sensing a plurality of points of the mixture 110 while changing the positions, the brightness information at different positions of the mixture 110 may be obtained.

Alternatively, the brightness information of the mixture 110 may be obtained in plurality by measuring the mixture 110 at different times and different positions.

In this case, the average of the plurality of values L of the measured mixture 110 may be obtained to determine whether the mixing is completed by determining whether the average is within a predetermined range. For example, in the experiment in the second embodiment, if the average of the values L measured three times is within a range of 34 or more and 36 or less, the completion of the mixing may be determined.

Thirteenth Embodiment

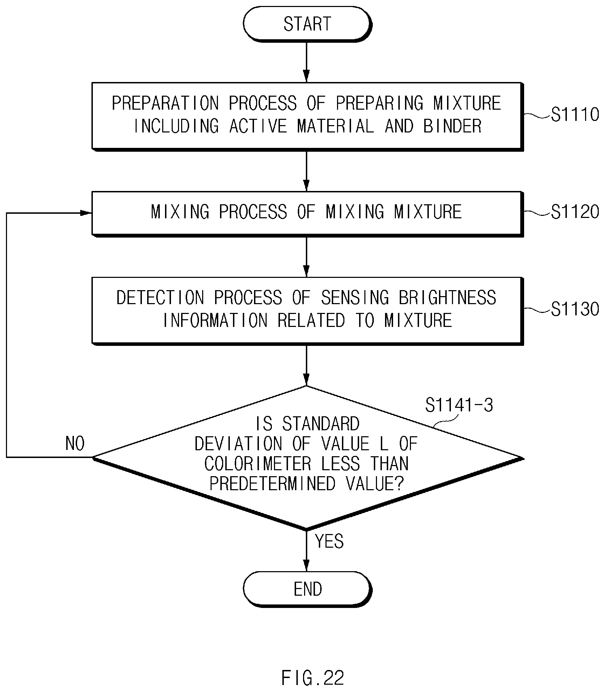

FIG. 22 is a flowchart illustrating a determination process in a method for manufacturing an electrode 100 according to a thirteenth embodiment of the present invention.

Referring to FIG. 22, the thirteenth embodiment of the present invention will be described.

The thirteenth embodiment differs from the twelfth embodiment in that it is determined using a standard deviation, which is an example of dispersity, rather than the average of the values L.

If the standard deviation of the value L is less than or equal to a predetermined value, the mixing may be determined to be completed, and if the standard deviation of the value L is greater than or equal to the predetermined value, the mixing has not yet been achieved, and thus, the mixing may be continued. In other words, the second controller 1900 may be configured to determine the completion of the mixing based on the standard deviation of the values L of the plurality of mixtures 110 obtained by the second sensor device 1400, which is within a predetermined range (S1141-3).

Fourteen Embodiment

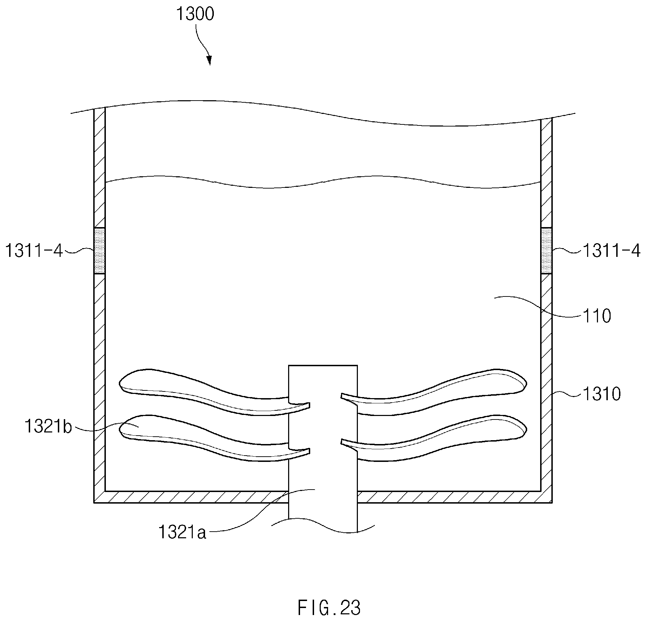

FIG. 23 is a cross-sectional view of a pre-mixing device 1300 according to a fourteenth embodiment of the present invention.
Referring to FIG. 23, the fourteenth embodiment of the present invention will be described.
The fourteenth embodiment differs from the first embodiment in that the pre-mixing device 1300 includes a plurality of second measuring parts 1311-4.
The second measuring part 1311-4 may be provided in plurality. A second sensor device 1400 corresponding to the second measuring part 1311-4 may also be provided in plurality. When the plurality of second measuring parts 1311-4 are provided, it may be easy to obtain brightness information of a mixture 110 at a plurality of positions.

Fifteenth Embodiment

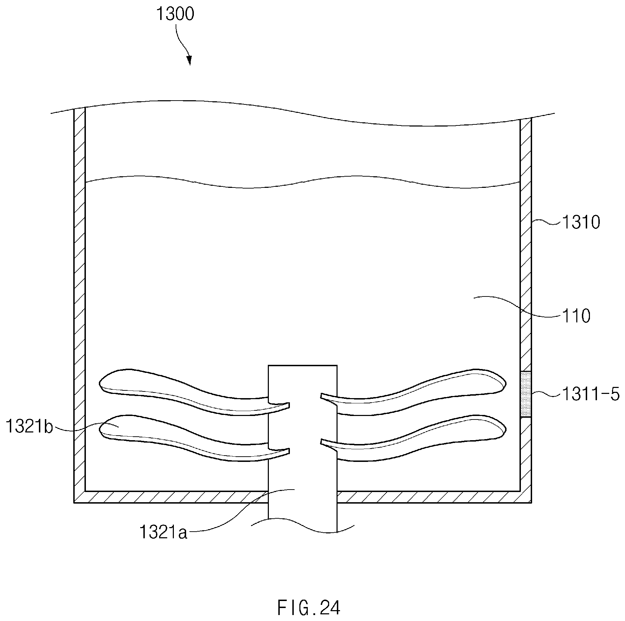

FIG. 24 is a cross-sectional view of a pre-mixing device 1300 according to a fifteenth embodiment of the present invention.
Referring to FIG. 24, the fifteenth embodiment of the present invention will be described.
The fifteenth embodiment differs from the tenth embodiment in that a position of a second measuring part 1311-5 is disposed adjacent to a stirrer wing 1321b.
A mixture 110 may be disposed in a gap generated between an end of the stirrer wing 1321b and an inner wall of a mixing case 1310. The mixture 110 disposed in the gap by the end of the stirrer wing 1321b may be subjected to shear force. When a stirrer 1321 rotates to apply shear force to the mixture 110 disposed in the gap, the mixture 110 may be pressed to be spread. The second measuring part 1311-5 may be disposed adjacent to the stirrer wing 1321b and thus may be in direct contact with the spread mixture 110. Here, when the second sensor device 1400 measures the spread mixture 110 through the second measuring part 1311-5, measurement accuracy related to brightness of the mixture 110 may increase.
Unless explicitly stated, the embodiments described above may be combined with other embodiments. Alternatively, it may be considered that combinations between the embodiments are possible, unless one embodiment is explicitly limited in combination with another embodiment. The combination of any embodiment and other embodiments may be deemed to be disclosed in this document.
While the embodiments of the present invention have been described in detail, the protection scope of the present invention is not limited to the embodiments. Various modifications and improvements may be made by one of ordinary skill in the field of the present invention, and are also included in the protection scope of the present invention.

[Description of the Symbols]

1: Kneading system
B: Secondary battery
EA: Electrode assembly
ES: Electrode stack
100: Electrode
110: Mixture
110a: Positive electrode mixture
110b: Negative electrode mixture
111: Active material
112: Binder
112a: Fibrous binder
113: Conductive material
120: Current collector
121: Electrode tab
130: Electrode lead

131: Insulating part
140: Separator
200: Battery case
210: Accommodation part
210S: Electrode accommodation space
220: Side part
221: Lead sealing part
222: Degassing part
223: Folding part
300: Kneading device
301A: Inlet
302A: Outlet
310: Kneading case
311, 311-1, 311-2, 311-3, 311-4, 311-5: First measuring part
312: Shutter
320: Cam
321g: Kneading gap
330: Cam shaft
400: First driving device
500: First sensor device
900: First controller
910: First processor
920: First memory
2: Pre-mixing system
1300: Pre-mixing device
1301A: Inlet
1302A: Outlet
1310: Mixing case
1311: Second measurement part
1320: Mixer
1321: Stirrer
1321a: Stirrer shaft
1321b: Stirrer wing
1322: Second driving device
1400: Second sensor device
1900: Second controller
1910: Second processor
1920: Second memory

**Claims**

1.  A mixing system comprising a pre-mixing system and a kneading system,
    wherein the kneading system comprises:

    a kneading device configured to knead a mixture comprising an active material and a binder;
    a first sensor device configured to detect brightness of the mixture; and
    a first controller configured to determine at least one of crystallinity of the binder and elongation at break of the mixture based on brightness information of the mixture, which is detected by the first sensor device.

2.  The mixing system of claim 1, wherein the first sensor device of the kneading system comprises a colorimeter, and the brightness information of the mixture is defined as a value L of the colorimeter.

3.  The mixing system of claim 2, wherein the crystallinity of the binder of the kneading system is defined as X, and the controller is configured to determine the crystallinity of the binder by following [Equation 1].

[Equation 1]

$$(X) = -A*(L) + B$$

$$3.4 < A < 3.5, \quad 110 < B < 120$$

4. The mixing system of claim 2, wherein the crystallinity of the binder of the kneading system is defined as X, and the first controller is configured to determine the crystallinity of the binder by following [Equation 2].

[Equation 2]

$$X = -3.47L + 115.4$$

5. The mixing system of claim 2, wherein the first controller of the kneading system is configured to determine that the crystallinity of the binder is 16% or more and less than 18% based on the value L being 28 or more and 28.7 or less.

6. The mixing system of claim 1, wherein the kneading device of the kneading system comprises:

    a kneading case configured to accommodate the mixture;
    a kneading cam configured to rotate inside the kneading case and configured so that the mixture is pressed between the kneading cam and the kneading case; and
    a driving device configured to apply driving force to the kneading can so as to rotate the kneading cam, wherein the first controller is configured to control the driving device based on the crystallinity of the binder.

7. The mixing system of claim 1, wherein the first controller of the kneading system is configured to control the kneading device so that the kneading is stopped, based on the determination that the crystallinity of the binder is within a preset range.

8. The mixing system of claim 1, wherein the first controller of the kneading system is configured to the kneading device so that the mixture is discharged from the kneading device, based on the determination that the crystallinity of the binder is within a preset range.

9. The mixing system of claim 7, wherein, in the kneading system, the preset crystallinity of the binder is 10% to 20%.

10. The mixing system of claim 7, wherein, in the kneading system, the preset crystallinity of the binder is 17% to 18%.

11. The mixing system of claim 1, wherein the first controller of the kneading system is configured to control the kneading device so that the mixture is added to the kneading device, based on the determined crystallinity being less than 20%.

12. The mixing system of claim 1, wherein the first controller of the kneading system is configured to control the kneading device so that the kneading of the mixture proceeds, based on the crystallinity exceeding 20%.

13. The mixing system of claim 1, wherein the binder has a brighter color than that of the active material.

14. The mixing system of claim 1, wherein, in the kneading system, the active material has a black color, and the binder has a white color.

15. The mixing system of claim 1, wherein, in the kneading system, the mixture is a dry type that does not contain a solvent.

16. The mixing system of claim 1, wherein the kneading device of the kneading system is a kneading case configured to accommodate the mixture and comprises a first measuring part configured to enable the first sensor device to detect the inside.

17. The mixing system of claim 16, wherein the first measuring part is transparent or translucent.

18. The mixing system of claim 16, wherein the first sensor device of the kneading system is adjacent to the first measuring part.

19. The mixing system of claim 16, wherein the first measuring part of the kneading system is defined as a hole through which the mixture passes.

20. The mixing system of claim 16, wherein the kneading device of the kneading system further comprises a shutter configured to cover the measuring part, the shutter being movable to an opened position, at which the measuring part is exposed, and a closed position, at which the measuring part is covered.

21. The mixing system of claim 16, wherein the first measuring part is provided at a position at which the mixture is kneaded.

22. The mixing system of claim 16, wherein the kneading device of the kneading system further comprises a kneading cam configured to rotate inside the kneading case,
wherein the kneading cam is provided to press the mixture disposed between the kneading case and the kneading cam by the rotation.

23. The mixing system of claim 22, wherein, in the kneading system, a kneading cap in which the mixture is disposed is formed between the kneading cam and an inner wall of the kneading case, and
the first measuring part is disposed at a portion facing the kneading gap.

24. The mixing system of claim 22, wherein the first measuring part of the kneading system extends in a circumferential direction with respect to a rotation axis of the cam.

25. The mixing system of claim 22, wherein the first measuring part is disposed at an opposite side of a gravity direction with respect to a rotational center of the kneading cam.

26. The mixing system of claim 22, wherein the kneading case of the kneading system extends in one direction,

the kneading cam is provided in plurality to move the mixture along the extension direction of the kneading case,
wherein the plurality of kneading cams are arranged in the extension direction of the kneading case,
the first measuring part is provided in plurality, which are arranged in a longitudinal direction of the kneading case, and
the first sensor device is provided in plurality, which correspond to the first measuring parts, respectively.

27. The mixing system of claim 23, wherein the kneading cam is provided as a pair at left and right sides,

the kneading case is configured so that the pair of kneading gaps are provided to correspond to the pair of the kneading cams, respectively, and
the first measuring part is disposed at at least one of portions of the pair of kneading cases corresponding to the pair of the kneading gaps.

28. The mixing system of claim 27, wherein the kneading case is configured to accommodate the pair of kneading cams and configured so that spaces, in which the pair of kneading cams are disposed, communicate with each other.

29. The mixing system of claim 1, wherein the pre-mixing system comprises:

a pre-mixing device configured to accommodate and mix the mixture containing the active material and the binder;
a second sensor device configured to sense information about the brightness of the mixture; and
a second controller configured to determine a degree to which the mixture is mixed based on the brightness information of the mixture obtained by the second sensor device.

30. The mixing system of claim 29, wherein the second sensor device of the pre-mixing system comprises a colorimeter,

the information about the brightness of the mixture is defined as a value L of the colorimeter, and
the second controller is configured to determine the degree of the mixing of the mixture based on the value L of the mixture obtained by the second sensor device.

31. The mixing system of claim 29, wherein, in the pre-mixing system, the second controller is configured to determine whether to knead the mixture based on the determined degree of the mixing of the mixture.

32. The mixing system of claim 29, wherein the pre-mixing device comprises:

   a mixing case configured to accommodate the mixture; and
   a stirrer configured to mix the mixture inside the mixing case,
   wherein the second controller is configured to control whether to stop the stirrer based on whether the brightness of the mixture is in a predetermined range.

33. The mixing system of claim 30, wherein, in the pre-mixing system, the second controller is configured to determine completion of the mixing based on the value L of the mixture being 30 or more and 40 or less.

34. The mixing system of claim 30, wherein, in the pre-mixing system, the second controller is configured to determine completion of the mixing based on the value L of the mixture being 34 or more and 36 or less.

35. The mixing system of claim 29, wherein, in the pre-mixing system, the second controller is configured to determine the degree to which the mixture is mixed based on the brightness information of the plurality of mixtures.

36. The mixing system of claim 29, wherein, in the pre-mixing system, the second controller is configured to determine the degree of the mixing of the mixture based on the brightness information of the plurality of the mixtures measured at different times.

37. The mixing system of claim 29, wherein, in the pre-mixing system, the second controller is configured to determine the degree of the mixing of the mixture based on the brightness information of the plurality of mixtures measured at different positions.

38. The mixing system of claim 35, wherein the second sensor device of the pre-mixing system comprises a colorimeter,

   the information about the brightness of the mixture is defined as a value L of the colorimeter, and
   the second controller is configured to determine the completion of the mixing based on an average of values L of the plurality of the mixtures, which are obtained by the second sensor device being 34 or more and 36 or less.

39. The mixing system of claim 35, wherein the second sensor device of the pre-mixing system comprises a colorimeter,

   the information about the brightness of the mixture is defined as a value L of the colorimeter, and
   the second controller is configured to determine the completion of the mixing based on a standard deviation of values L of the plurality of the mixtures obtained by the second sensor device being disposed within a predetermined range.

40. The mixing system of claim 29, wherein the pre-mixing device comprises:

   a mixing case configured to accommodate the mixture; and
   a stirrer configured to mix the mixture inside the mixing case,
   wherein the mixing case comprises a second measuring part configured to detect the inside of the second sensor device.

41. The mixing system of claim 40, wherein the second measuring part is transparent or translucent.

42. The mixing system of claim 40, wherein the second measuring part is configured to be provided at a disposed at which the mixture is in contact with the second measuring part.

43. A method for manufacturing an electrode, the method comprising:

   a preparation process of preparing a mixture comprising an active material and a binder;
   a process of kneading the mixture comprising the active material and the binder;
   a first detection process of detecting brightness of the mixture by a value L of a colorimeter; and
   a first determination process of determining crystallinity of the binder based on the brightness information of the mixture.

44. The method of claim 43, wherein, in the first detection process or the first determination process, the brightness information of the mixture is defined as the value L of the colorimeter.

45. The method of claim 43, wherein the crystallinity of the binder is defined as X, and
the first determination process of determining the crystallinity of the binder comprises a process of determining the crystallinity by following [Equation 1].

$$[Equation\ 1]$$

$$(X) = -A*(L) + B$$

$$3.4<A<3.5,\ 110<B<120$$

46. The method of claim 43, wherein the first determination process of determining the crystallinity of the binder comprises a process of determining that the crystallinity of the binder is 16% or more and less than 18% based on the value L being 28 or more and 28.7 or less.

47. The method of claim 43, further comprising:

a mixing process of mixing the mixture;
a second detection process of sensing the brightness information about the mixture; and
a second determination process of determining a degree of the mixing of the mixture based on the sensed brightness information about the mixture.

48. The method of claim 47, wherein the second detection process is performed by a colorimeter, and
the second determination process is provided to determine the degree of the mixing of the mixture based on the value L of the mixture obtained by the colorimeter.

49. The method of claim 48, wherein the second determination process is provided to determine strength of the electrode formed by the mixture based on the brightness information of the mixture.

50. The method of claim 49, further comprising a mixing termination process for terminating the mixing based on the value L of the mixture being 34 or more and 36 or less.

51. An electrode comprising:

a mixture manufactured by the mixing system of claim 1 or the method for manufacturing the electrode of claim 43; and
a current collector to which the mixture is applied,
wherein the mixture comprises an active material having a weight ratio of 80% or more and 98% or less, a conductive material having a weight ratio of 0.5% or more and 5% or less, and a binder having a weight ratio of 0.5% or more and 10% or less,
wherein a value L of a colorimeter of the mixture is 34 or more and 36 or less.

FIG.1

FIG.2

```
        ┌─────────────┐
        │    START     │
        └──────┬──────┘
               │
               ▼
  ┌────────────────────────────┐
  │        PRE-MIXING          │ ～S10
  └────────────┬───────────────┘
               │
               ▼
  ┌────────────────────────────┐
  │         KNEADING           │ ～S20
  └────────────┬───────────────┘
               │
               ▼
  ┌────────────────────────────┐
  │         CRUSHING           │ ～S30
  └────────────┬───────────────┘
               │
               ▼
  ┌────────────────────────────┐
  │        CALENDARING         │ ～S40
  └────────────┬───────────────┘
               │
               ▼
  ┌────────────────────────────┐
  │        LAMINATION          │ ～S50
  └────────────┬───────────────┘
               │
               ▼
  ┌────────────────────────────┐
  │         STACKING           │ ～S60
  └────────────┬───────────────┘
               │
               ▼
        ┌─────────────┐
        │     END      │
        └─────────────┘
```

FIG.3

FIG.4

FIG.5

EP 4 768 119 A1

FIG.6

FIG.7

300

311-2 320

321g

312-2

310

FIG.8

300

320

311-3

321g

310

FIG.9

FIG.10

FIG.11

FIRST SENSOR DEVICE 500

FIRST CONTROLLER 900

FIRST PROCESSOR 910

FIRST MEMORY 920

FIRST DRIVING DEVICE 400

FIG.12

START

MEASURE BRIGHTNESS INFORMATION OF
MIXTURE THROUGH SENSOR DEVICE — S100

DETERMINE CRYSTALLINITY OF
SLURRY BY BRIGHTNESS
INFORMATION OF MIXTURE — S200

S300

NO   IS
FIBERIZATION WITHIN PRESET
RANGE?

YES

STOP OPERATION OF KNEADING DEVICE OR
OPEN OUTLET OF KNEADING DEVICE — S400

END

FIG.13

START

MEASURE BRIGHT INFORMATION OF
SLURRY AT FIRST POSITION
THROUGH SENSOR DEVICE — S110-1

DETERMINE CRYSTALLINITY OF
SLURRY AT FIRST POSITION BY
BRIGHTNESS INFORMATION OF SLURRY — S210-1

MEASURE BRIGHT INFORMATION OF
SLURRY AT SECOND POSITION
THROUGH SENSOR DEVICE — S120-1

DETERMINE CRYSTALLINITY OF
SLURRY AT SECOND POSITION BY
BRIGHTNESS INFORMATION OF SLURRY — S220-1

DETERMINE CRYSTALLINITY OF
SLURRY AT OUTLET THROUGH CRYSTALLINITY
AT FIRST POSITION AND
CRYSTALLINITY AT SECOND POSITION — S130-1

NO

IS TERMINATION
CONDITION SATISFIED? — S400-1

NO

IS
CRYSTALLINITY AT OUTLET
WITHIN PRESET RANGE? — S310-1

YES

END

NO

IS
CRYSTALLINITY AT OUTLET
LESS THAN PRESET
RANGE? — S320-1

YES

CONTROL DRIVING
DEVICE SO THAT
CAM ROTATE SLOWLY — S520-1

NO

CONTROL DRIVING DEVICE SO
THAT CAM ROTATE FASTER — S510-1

FIG.14

44

```
                          ┌──────────────┐
                          │    START     │
                          └──────────────┘
                                 │
                                 ▼
         ┌─────────────────────────────────────┐
         │  MEASURE BRIGHTNESS INFORMATION OF   │──S100 ◄────────────────────────────┐
         │   SLURRY THROUGH SENSOR DEVICE       │                                    │
         └─────────────────────────────────────┘                                    │
                                 │                                                   │
                                 ▼                                                   │
         ┌─────────────────────────────────────┐                                    │
         │  DETERMINE CRYSTALLINITY OF SLURRY BY│──S200                              │
         │   BRIGHTNESS INFORMATION OF SLURRY   │                                    │
         └─────────────────────────────────────┘                                    │
                                 │                           NO                      │
                                 ▼                     S320-2  │                     │
                   S310-2                                      ▼                     │
                  ◇─────────────◇       ◇──────────────────────◇         ┌──────────────────┐
                 ╱ IS CRYSTALLINITY ╲ NO ╱ IS CRYSTALLINITY       ╲ YES  │  ADD SLURRY TO   │──S500-2
                ◇ AT OUTLET WITHIN   ◇───◇ AT OUTLET GREATER THAN  ◇────▶│  KNEADING DEVICE │
                 ╲ PRESET RANGE?   ╱     ╲ PRESET RANGE?         ╱       └──────────────────┘
                  ◇─────────────◇         ◇──────────────────────◇
                         │ YES
                         ▼
         ┌─────────────────────────────────────┐
         │  STOP OPERATION OF KNEADING DEVICE OR│──S400
         │   OPEN OUTLET OF KNEADING DEVICE     │
         └─────────────────────────────────────┘
                         │
                         ▼
                  ┌──────────────┐
                  │     END      │
                  └──────────────┘
```

FIG.15

FIG.16

1300

1311

110

1310

1321b

1321a

FIG.17

FIG.18

START

PREPARATION PROCESS OF PREPARING MIXTURE
INCLUDING ACTIVE MATERIAL AND BINDER — S1110

MIXING PROCESS OF MIXING MIXTURE — S1120

DETECTION PROCESS OF SENSING BRIGHTNESS
INFORMATION RELATED TO MIXTURE — S1130

IS MIXTURE
MIXED TO DESIRED DEGREE        S1140
WHEN DEGREE OF MIXING OF MIXTURE IS
DETERMINED BASED ON SENSED BRIGHTNESS
INFORMATION RELATED
TO MIXTURE?

NO

YES

END

FIG.19

START

PREPARATION PROCESS OF
PREPARING MIXTURE INCLUDING
ACTIVE MATERIAL AND BINDER — S1110

MIXING PROCESS OF MIXING MIXTURE — S1120

DETECTION PROCESS OF
SENSING BRIGHTNESS
INFORMATION RELATED TO MIXTURE — S1130

S1141-1

IS VALUE L
OF COLORIMETER 34 OR
MORE AND 36 OR LESS?

NO

YES

END

FIG.20

```
                          ┌──────────────┐
                          │    START     │
                          └──────┬───────┘
                                 │
                                 ▼
        ┌───────────────────────────────────────────────────┐
        │  PREPARATION PROCESS OF PREPARING MIXTURE          │──S1110
        │  INCLUDING ACTIVE MATERIAL AND BINDER              │
        └──────────────────────┬────────────────────────────┘
                               │
                               ▼
        ┌───────────────────────────────────────────────────┐
    ┌──▶│  MIXING PROCESS OF MIXING MIXTURE                  │──S1120
    │   └──────────────────────┬────────────────────────────┘
    │                          │
    │                          ▼
    │   ┌───────────────────────────────────────────────────┐
    │   │  DETECTION PROCESS OF SENSING BRIGHTNESS           │──S1130
    │   │  INFORMATION RELATED TO MIXTURE                    │
    │   └──────────────────────┬────────────────────────────┘
    │                          │
    │                          ▼
    │                  IS MIXTURE
    │            MIXED TO DESIRED DEGREE          S1140-2
    │  NO    WHEN DEGREE OF MIXING OF MIXTURE IS
    └──── DETERMINED BASED ON SENSED BRIGHTNESS
                 INFORMATION RELATED
                    TO MIXTURE?
                          │
                         YES
                          ▼
                   ┌──────────────┐
                   │     END      │
                   └──────────────┘
```

FIG.21

START

PREPARATION PROCESS OF PREPARING MIXTURE INCLUDING ACTIVE MATERIAL AND BINDER — S1110

MIXING PROCESS OF MIXING MIXTURE — S1120

DETECTION PROCESS OF SENSING BRIGHTNESS INFORMATION RELATED TO MIXTURE — S1130

IS STANDARD DEVIATION OF VALUE L OF COLORIMETER LESS THAN PREDETERMINED VALUE? — S1141-3

NO

YES

END

FIG.22

FIG.23

1300

1310

110

1311-5

1321b

1321a

FIG.24

## INTERNATIONAL SEARCH REPORT

| International application No. |
| --- |
| **PCT/KR2025/006015** |

| A. | CLASSIFICATION OF SUBJECT MATTER |
| --- | --- |

**B01F 35/214**(2022.01)i; **B01F 27/721**(2022.01)i; **B01F 35/50**(2022.01)i; **B01F 35/21**(2022.01)i; **B01F 23/53**(2022.01)i; **H01M 4/04**(2006.01)i; **H01M 4/139**(2010.01)i; **H01M 10/00**(2006.01)i

According to International Patent Classification (IPC) or to both national classification and IPC

| B. | FIELDS SEARCHED |
| --- | --- |

Minimum documentation searched (classification system followed by classification symbols)

B01F 35/214(2022.01); B32B 27/32(2006.01); C08J 9/28(2006.01); G01Q 30/04(2010.01); G01Q 30/20(2010.01); G01R 31/36(2006.01); H01L 33/00(2010.01); H01M 10/052(2010.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 (electrode), 활물질 (active material), 바인더 (binder), 측정 (sensing), 결정화 (crystallization), 밝기 (brightness)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2646711 B1 (LG ENERGY SOLUTION, LTD.) 12 March 2024 (2024-03-12)<br>claims 1, 10-11 | 1-51 |
| A | KR 10-2580935 B1 (LG ENERGY SOLUTION, LTD.) 19 September 2023 (2023-09-19)<br>claims 1-9 | 1-51 |
| A | KR 10-2023-0149754 A (LG ENERGY SOLUTION, LTD.) 27 October 2023 (2023-10-27)<br>claims 1-7 | 1-51 |
| A | KR 10-2017-0106587 A (SAMSUNG ELECTRONICS CO., LTD.) 21 September 2017 (2017-09-21)<br>claims 1-5 | 1-51 |
| A | WO 2021-210317 A1 (ASAHI KASEI KABUSHIKI KAISHA) 21 October 2021 (2021-10-21)<br>claims 1-5 | 1-51 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 August 2025** | **04 August 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/006015**

| Patent document cited in search report | | | Publication date (day/month/year) | Patent family member(s) | | | Publication date (day/month/year) |
|---|---|---|---|---|---|---|---|
| KR | 10-2646711 | B1 | 12 March 2024 | CN | 110431690 | A | 08 November 2019 |
| | | | | CN | 110431690 | B | 02 September 2022 |
| | | | | EP | 3579308 | A1 | 11 December 2019 |
| | | | | EP | 3579308 | A4 | 22 April 2020 |
| | | | | EP | 3579308 | B1 | 05 January 2022 |
| | | | | EP | 3579308 | B8 | 09 February 2022 |
| | | | | JP | 2020-509559 | A | 26 March 2020 |
| | | | | JP | 7038949 | B2 | 22 March 2022 |
| | | | | KR | 10-2019-0053121 | A | 17 May 2019 |
| | | | | KR | 10-2024-0037909 | A | 22 March 2024 |
| | | | | KR | 10-2025-0010124 | A | 20 January 2025 |
| | | | | KR | 10-2754849 | B1 | 15 January 2025 |
| | | | | US | 11728507 | B2 | 15 August 2023 |
| | | | | US | 2020-0014056 | A1 | 09 January 2020 |
| KR | 10-2580935 | B1 | 19 September 2023 | KR | 10-2020-0010932 | A | 31 January 2020 |
| KR | 10-2023-0149754 | A | 27 October 2023 | CN | 119054094 | A | 29 November 2024 |
| | | | | EP | 4492481 | A1 | 15 January 2025 |
| | | | | JP | 2025-513303 | A | 24 April 2025 |
| | | | | KR | 10-2024-0040706 | A | 28 March 2024 |
| | | | | KR | 10-2650672 | B1 | 22 March 2024 |
| | | | | WO | 2023-204649 | A1 | 26 October 2023 |
| KR | 10-2017-0106587 | A | 21 September 2017 | KR | 10-2553628 | B1 | 11 July 2023 |
| | | | | US | 10302412 | B2 | 28 May 2019 |
| | | | | US | 2017-0261310 | A1 | 14 September 2017 |
| WO | 2021-210317 | A1 | 21 October 2021 | CN | 114175385 | A | 11 March 2022 |
| | | | | CN | 118507990 | A | 16 August 2024 |
| | | | | CN | 118539089 | A | 23 August 2024 |
| | | | | CN | 118610700 | A | 06 September 2024 |
| | | | | EP | 4009436 | A1 | 08 June 2022 |
| | | | | EP | 4009436 | A4 | 17 July 2024 |
| | | | | EP | 4531188 | A2 | 02 April 2025 |
| | | | | EP | 4531188 | A3 | 04 June 2025 |
| | | | | JP | 2021-210317 | A1 | 21 October 2021 |
| | | | | JP | 2022-070897 | A | 13 May 2022 |
| | | | | JP | 7021403 | B1 | 16 February 2022 |
| | | | | JP | 7507804 | B2 | 28 June 2024 |
| | | | | KR | 10-2022-0033495 | A | 16 March 2022 |
| | | | | US | 2022-0294080 | A1 | 15 September 2022 |
| | | | | US | 2025-0038360 | A1 | 30 January 2025 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240059394
- KR 1020240059437

- KR 1020240059441